# EUROPÄISCHE PATENTSCHRIFT

(11) **EP 4 387 499 B1**
(45) Veröffentlichungstag und Bekanntmachung des Hinweises auf die Patenterteilung: **14.10.2026**
(21) Anmeldenummer: 21766442.4
(22) Anmeldetag: 19.08.2021
(51) Int. Cl.: A47L 11/40, A47L 11/28

(54) **BODENREINIGUNGSSYSTEM, BODENREINIGUNGSGERÄT UND VERFAHREN ZUM BETREIBEN EINES BODENREINIGUNGSSYSTEMS ODER EINES BODENREINIGUNGSGERÄTES**
FLOOR-CLEANING SYSTEM, FLOOR-CLEANING APPARATUS, AND METHOD FOR OPERATING A FLOOR-CLEANING SYSTEM OR A FLOOR-CLEANING APPARATUS
SYSTÈME DE NETTOYAGE DE SOL, APPAREIL DE NETTOYAGE DE SOL ET PROCÉDÉ DE FONCTIONNEMENT D'UN SYSTÈME DE NETTOYAGE DE SOL OU D'UN APPAREIL DE NETTOYAGE DE SOL

(43) Veröffentlichungstag der Anmeldung: 26.06.2024
(73) Patentinhaber: Alfred Kärcher SE & Co. KG, 71364 Winnenden (DE)
(72) Erfinder: HÖNNIGE, Heiko, 71364 Winnenden (DE); GARCIA LOPEZ, Felipe, 71364 Winnenden (DE); DRUST, Manuel, 71364 Winnenden (DE); EHRENTREICH, Thilo, 71364 Winnenden (DE); VLASOV, Fedor, 71364 Winnenden (DE); HOFNER, Christian, 71364 Winnenden (DE); HINZ, Gereon, 80939 München (DE)
(74) Vertreter: DTS Patent- und Rechtsanwälte PartmbB
(86) Internationale Anmeldenummer: PCT/EP2021/073077
(87) Internationale Veröffentlichungsnummer: WO 2023/020699

(56) Entgegenhaltungen:
- EP-A1- 3 512 668
- EP-A1- 3 832 418

## Beschreibung

Die vorliegende Erfindung betrifft ein Bodenreinigungssystem, umfassend ein selbstfahrendes und selbstlenkendes Bodenreinigungsgerät, mindestens eine ansteuerbare Anzeigeeinheit und mindestens eine Speichereinheit, wobei das Bodenreinigungsgerät ein Fahrwerk zum Verfahren auf einer Bodenfläche, eine Steuereinheit, eine Sensoreinheit, mindestens eine Reinigungseinheit und eine Bedieneinheit umfasst, wobei mittels der Sensoreinheit eine Umgebung zum Lokalisieren und/oder Navigieren des Bodenreinigungsgerätes erfassbar ist, insbesondere während der Bewegung, wobei in der mindestens einen Speichereinheit Reinigungspfade für das Bodenreinigungsgerät mit einer jeweiligen Information über einen Fahrweg und vorzugsweise den Einsatz mindestens einer Reinigungseinheit gespeichert sind.

Ferner betrifft die vorliegende Erfindung ein Bodenreinigungsgerät eines Bodenreinigungssystems der vorstehend beschriebenen Art.

Außerdem betrifft die vorliegende Erfindung ein Verfahren zum Steuern eines Bodenreinigungssystems und eines Bodenreinigungsgeräts.

Das vorstehend beschriebene Bodenreinigungsgerät erlaubt eine autonome Durchführung einer Reinigungsaufgabe. Hierbei kann das Bodenreinigungsgerät gemäß der im Reinigungspfad gespeicherten Informationen auf der Bodenfläche verfahren und diese abreinigen. Der Reinigungspfad weist Informationen über den zurückzulegenden Fahrweg und insbesondere den Einsatz mindestens einer Reinigungseinheit auf. Beispielsweise kann hinterlegt sein, welche Reinigungseinheit aktiviert ist und mit welcher Reinigungsleistung (beispielsweise Antriebsleistung eines Motors und/oder Dosierung einer Reinigungsflüssigkeit) die Bodenfläche zu reinigen ist.

Es sind Bodenreinigungsgeräte bekannt, bei denen zuvor in einem Einlern-Betriebsmodus (Teach-In) durch einen Benutzer abgefahrene Reinigungspfade gespeichert werden, die anschließend selbsttätig vom Bodenreinigungsgerät wiederholt werden können, wie es beispielsweise in der EP 3 832 418 A1 gezeigt ist.

Aufgabe der vorliegenden Erfindung ist es, ein Bodenreinigungssystem, ein Bodenreinigungsgerät und ein Verfahren zum Betreiben des Bodenreinigungssystems oder des Bodenreinigungsgerätes bereitzustellen, das dem Benutzer eine benutzerfreundlichere Möglichkeit der Vorgabe von Reinigungsaufgaben ermöglicht.

Diese Aufgabe wird bei einem Bodenreinigungssystem der eingangs genannten Art erfindungsgemäß dadurch gelöst, dass von einem Benutzer an der Bedieneinheit eine Reinigungsaufgabe durch Verknüpfen von zwei oder mehr aufeinanderfolgend abzuarbeitenden Reinigungspfaden vorgebbar und die Reinigungsaufgabe vom Bodenreinigungsgerät selbsttätig abarbeitbar ist, wobei in der Speichereinheit mindestens eine anhand der Sensoreinheit erfassbare charakteristische Landmarke gespeichert ist, der zwei oder mehr Reinigungspfade zugeordnet sind, wobei eine Startposition und/oder eine Endposition eines jeweiligen Reinigungspfades sich an oder bei der Landmarke befindet, und wobei dem Benutzer an der mindestens einen Anzeigeeinheit eine Auswahl der der jeweiligen Landmarke zugeordneten Reinigungspfade bereitstellbar ist.

Beim erfindungsgemäßen Bodenreinigungssystem besteht die Möglichkeit, Reinigungspfade miteinander zu einer Reinigungsaufgabe zu verknüpfen. Zwei oder mehr Reinigungspfade als Bestandteil der Reinigungsaufgabe können vom Bodenreinigungsgerät aufeinanderfolgend abgefahren und jeweils die Bodenfläche gereinigt werden. Gewissermaßen zur "Organisation", um eine räumliche Lokalisation der Reinigungspfade in der Umgebung des Bodenreinigungsgerätes zu ermöglichen, ist in der mindestens einen Speichereinheit mindestens eine charakteristische Landmarke gespeichert. Der Landmarke sind zwei oder mehr Reinigungspfade zugeordnet, deren jeweilige Startposition und/ oder Endposition sich an oder bei der Landmarke befindet. Basierend auf den zur Verfügung gestellten Informationen kann die Reinigungsaufgabe benutzerfreundlich erstellt werden. Beispielsweise werden Reinigungspfade so miteinander verknüpft, dass eine Endposition eines ersten Reinigungspfades und eine Startposition des nächsten Reinigungspfades an derselben Landmarke liegen. Es besteht vorzugsweise die Möglichkeit, über eine Mehrzahl von optional vorhandenen Landmarken hinweg auch komplexe Reinigungsaufgaben zu erstellen, zum Beispiel über mehrere Räume oder auch Stockwerke hinweg, wenn diese befahrbar sind. Durch die räumliche Beziehung der mindestens einen Landmarke zu den Reinigungspfaden ist vorzugsweise eine korrekte Navigation und/oder Lokalisierung des Bodenreinigungsgerätes sichergestellt, da ein wiederholter Positionsabgleich möglich ist.

"Bei der Landmarke" kann vorliegend insbesondere als "in unmittelbarer Umgebung" der Landmarke aufgefasst werden. "In unmittelbarer Umgebung" kann beispielsweise durch einen vorgegebenen oder vorgebbaren Abstand definiert sein, zum Beispiel einen Radius von ungefähr 5 m um die Landmarke. Erforderlich ist lediglich, dass die Landmarke von der Sensoreinheit erfassbar ist und hierauf basierend vom Bodenreinigungsgerät feststellbar ist, dass sich das Bodenreinigungsgerät an oder bei der Landmarke befindet.

Der Betrieb des Bodenreinigungsgerätes wird insbesondere von der Steuereinheit gesteuert, die mit der Sensoreinheit in Wirkverbindung stehen kann und das Fahrwerk ansteuert. Die Steuereinheit kann mit der mindestens einen Anzeigeeinheit, der mindestens einen Speichereinheit und der mindestens einen Reinigungseinheit gekoppelt sein.

Vorgesehen sein kann insbesondere, dass in der Speichereinheit zwei oder mehr anhand der Sensoreinheit erfassbare charakteristische Landmarken gespeichert sind, wobei zumindest einer Landmarke zwei oder mehr Reinigungspfade zugeordnet sind und jeder Landmarke mindestens ein Reinigungspfad zugeordnet ist. Eine Startposition und/oder eine Endposition eines jeweiligen Reinigungspfades kann sich an der jeweiligen Landmarke befinden. Dem Benutzer ist vorzugsweise an der mindestens einen Anzeigeeinheit eine Auswahl der der jeweiligen Landmarke zugeordneten Reinigungspfade bereitstellbar. Bei dieser Ausführungsform können auf benutzerfreundliche Weise die Reinigungspfade verschiedener Landmarken zu einer Reinigungsaufgabe kombinierbar sein. Denkbar ist hierbei insbesondere, hierauf wird nachfolgend noch eingegangen, dass ein Reinigungspfad von einer Landmarke zu einer hiervon unterschiedlichen weiteren Landmarke führt.

Vorgesehen sein kann nach dem Gesagten, dass mehrere Landmarken in der Speichereinheit gespeichert sein können. Die jeweiligen Landmarken können zum Beispiel indikativ für zumindest eines der Folgenden sein: genau ein Raum einer Umgebung, mindestens ein Raum einer Umgebung, ein Abschnitt innerhalb eines Raumes der Umgebung, oder ein Stockwerk. In letzterem Fall kann zum Beispiel für jedes Stockwerk eine Landmarke zur Kennzeichnung des Stockwerkes vorgesehen sein. Denkbar ist, dass das Bodenreinigungsgerät vorzugsweise selbsttätig unterschiedliche Stockwerke über mindestens eine Rampe und/oder mindestens einen Aufzug anfahren kann. Die jeweiligen stockwerksbezogenen Landmarken sind zum Beispiel miteinander über einen Transportpfad ohne Reinigung verbunden (beispielsweise bei Fahrt mit dem Aufzug), wobei auch der Einsatz eines Reinigungspfades denkbar ist, zum Beispiel bei einer Rampenfahrt.

Günstig ist es, wenn das Bodenreinigungssystem mindestens eine Landmarke umfasst, die vorzugsweise als ein von der Sensoreinheit optisch und/oder elektrisch und/oder elektromagnetisch erfassbares Markerelement ausgestaltet ist. Es zeigt sich in der Praxis, dass der Einsatz eines künstlichen Markerelementes sich als zuverlässig für die Erfassung durch die Sensoreinheit erweist. Hierbei werden vorzugsweise eindeutige Markerelemente eingesetzt, die vom Bodenreinigungsgerät zweifelsfrei als solche identifiziert werden können.

Im Hinblick auf eine optische Ausgestaltung der Sensoreinheit erweist es sich insbesondere als Vorteil, wenn das Markerelement optisch erfassbar ist.

Beispielsweise ist das Markerelement ein Matrixcode (z.B. ein Aruco-Markerelement) oder ein Barcode.

Vorzugsweise sind bei einer Mehrzahl von Landmarken alle Landmarken "künstliche" Markerelemente wie vorstehend beschrieben.

Vorgesehen sein kann, dass als Landmarke mindestens ein charakteristisches Merkmal einer Umgebung des Bodenreinigungsgerätes verwendbar ist. Hierbei kann es sich zum Beispiel um ein prägnantes Merkmal eines Raumes handeln, in dem sich das Bodenreinigungsgerät befindet. Derartige Merkmale sind zum Beispiel Begrenzungen des Raumes oder Gegenstände im Raum.

Vorzugsweise ist die Reinigungsaufgabe in der mindestens einen Speichereinheit speicherbar, insbesondere veränderbar speicherbar. Die gespeicherte Reinigungsaufgabe kann vom Benutzer wiederholt aufgerufen und abgearbeitet werden.

Die mindestens eine Landmarke kann zum Beispiel in einer Karte der Umgebung gespeichert sein.

Vorgesehen sein kann, dass in der Speichereinheit mindestens einer Landmarke zugeordnet eine Karte der Umgebung gespeichert ist, in der die der Landmarke zugeordneten Reinigungspfade gespeichert sind. Hierunter kann vorliegend insbesondere verstanden werden, dass die Position der Landmarke innerhalb der Karte gespeichert ist und ferner die Zuordnung von Reinigungspfaden zu dieser Landmarke, wobei Fahrwege nicht notwendigerweise optisch in der lokalen Karte darstellbar sein müssen. Die Verwendung der Karte erlaubt es, die Komplexität an eine Repräsentation der Umgebung in der Speichereinheit gering zu halten. Die Landmarke bildet gewissermaßen in der Karte einen "Ankerpunkt" für den mindestens einen der Landmarke zugeordneten Reinigungspfad. Die Navigation und/oder Lokalisierung innerhalb der Umgebung wird durch die Karte erleichtert.

Bei einer Mehrzahl von Landmarken kann eine Mehrzahl von Karten vorgesehen sein, in der eine jeweilige Landmarke mit einem oder mehreren dieser Landmarke zugeordneten Reinigungspfaden gespeichert ist.

Vorgesehen sein kann, dass zwischen verschiedenen Landmarken verlaufende Reinigungspfade und/oder Transportpfade die jeweiligen Karten miteinander verknüpfen. Karten können auf diese Weise gewissermaßen wie Puzzlestücke zur Ausbildung einer kombinierten Karte aneinandergefügt werden. Reinigungspfade und/oder Transportpfade können auf diese Weise über die einzelnen Karten hinweg in der kombinierten Karte gespeichert werden.

Vorgesehen sein kann, dass in der Speichereinheit eine kombinierte Karte gespeichert ist, in der mindestens eine Landmarke und die dieser Landmarke zugeordneten Reinigungspfade gespeichert sind. Auf diese Weise erfasst das System eine möglichst umfassende Information über die Umgebung.

Günstigerweise sind in der kombinierten Karte zwei oder mehr Landmarken und die diesen Landmarken zugeordneten Reinigungspfade gespeichert.

Es kann vorgesehen sein, dass alle Landmarken in der kombinierten Karte gespeichert sind.

Es können Reinigungspfade vorgesehen sein und der mindestens einen Landmarke zugeordnet sein, die eine Startposition und eine Endposition an der Landmarke aufweisen.

Alternativ oder ergänzend können Reinigungspfade vorgesehen sein, die eine Startposition an einer Landmarke aufweisen und eine Endposition an einer weiteren Landmarke. In letzterem Fall können zum Beispiel Reinigungsaufgaben über zwei oder auch mehr Landmarken hinweg definiert werden.

Vorgesehen sein kann, dass ein Reinigungspfad oder ein Transportpfad stets an einer Landmarke startet und stets an einer Landmarke endet, jedoch nicht notwendigerweise an derselben Landmarke.

Karten können beispielsweise kombiniert werden, wenn ein Reinigungspfad oder ein Transportpfad zwischen Landmarken verläuft, von denen zumindest eine in zwei Karten gespeichert ist.

Alternativ oder ergänzend kann eine Kombination von Karten beispielsweise möglich sein, wenn zumindest ein Teil der Umgebungsmerkmale innerhalb der jeweiligen Karten (nachfolgend auch "Sichtbereiche genannt") übereinstimmt. Dies kann vorzugsweise auch ohne Landmarke möglich sein, die in zwei oder mehr Karten gespeichert ist und als "Ankerpunkt" eingesetzt werden kann.

Die Auswahl der Landmarke und/oder des Reinigungspfades kann zum Beispiel durch Antippen in einer Darstellung der Karte erfolgen. Wird zum Beispiel eine Landmarke ausgewählt, können Reinigungspfade und/oder Transportpfade, die der Landmarke zugeordnet sind, angezeigt werden. Vorzugsweise werden bei zwischen verschiedenen Landmarken verlaufenden Pfaden beide jeweiligen Landmarken angezeigt.

Insbesondere kann auch vorgesehen sein, dass die Darstellung des Reinigungspfades unmittelbar, oder nach vorheriger Anwahl des Reinigungspfades durch einen Benutzer, eine Information über mindestens eine Landmarke umfasst, der der Reinigungspfad zugeordnet ist.

Das Bodenreinigungsgerät kann durch einen Benutzer handführbar sein.

Vorgesehen sein kann zum Beispiel, dass das Bodenreinigungsgerät vom Benutzer ausgehend von einer aktuellen Ausgangsposition zu einer Landmarke führbar ist, ausgehend von der die Reinigungsaufgabe begonnen wird. Die aktuelle Ausgangsposition ist beispielsweise der Ort der Erstellung der Reinigungsaufgabe.

Vorgesehen sein kann, dass das Bodenreinigungsgerät vom Benutzer nach Abschluss der Reinigungsaufgabe von einer Landmarke zu einer Abstellposition führbar ist.

Vorgesehen sein kann, dass das Bodenreinigungsgerät vom Benutzer von einer ersten Landmarke, an der ein Reinigungspfad endet, bis zu einer weiteren Landmarke führbar ist, an der ein weiterer Reinigungspfad beginnt. Dementsprechend kann vorgesehen sein, dass Fahrten zwischen unterschiedlichen Landmarken durch den Benutzer erfolgen und nicht durch das Bodenreinigungsgerät selbst.

Vorgesehen sein kann, dass das Bodenreinigungsgerät ausgehend von einer aktuellen Anfangsposition selbsttätig zu einer Landmarke verfährt, ausgehend von der die Reinigungsaufgabe begonnen wird.

Vorgesehen sein kann, dass das Bodenreinigungsgerät nach Abschluss der Reinigungsaufgabe von einer Landmarke selbsttätig zu einer Abstellposition verfährt.

Als günstig kann es sich erweisen, wenn das Bodenreinigungsgerät bei der Abarbeitung der Reinigungsaufgabe ausgehend von einer ersten Landmarke, an der eine Reinigungsaufgabe endet, zu einer weiteren Landmarke verfährt, an der ein weiterer Reinigungspfad beginnt. Eine derartige Leerfahrt oder Transportfahrt kann insbesondere vom Bodenreinigungsgerät selbsttätig ausgeführt werden.

Auf die Möglichkeit, einen Transportpfad vorzusehen, wurde bereits eingegangen.

Günstig kann es sein, wenn in der mindestens einen Speichereinheit mindestens ein Transportpfad ohne Einsatz der mindestens einen Reinigungseinheit verknüpft mit zumindest einer Landmarke gespeichert ist, der vom Benutzer insbesondere als Bestandteil der Reinigungsaufgabe vorgebbar ist. Der Transportpfad dient beispielsweise dazu, Bereiche der Umgebung ohne Reinigung zu durchfahren, um von einem ersten Reinigungspfad zu einem zweiten Reinigungspfad zu gelangen.

Der Transportpfad erstreckt sich zum Beispiel von einer aktuellen Ausgangsposition zu einer Landmarke, ausgehend von der die Reinigungsaufgabe durchführbar ist.

Der Transportpfad erstreckt sich zum Beispiel von einer Landmarke, an der ein Reinigungspfad oder die Reinigungsaufgabe endet, bis zu einer Abstellposition.

Der Transportpfad erstreckt sich zum Beispiel von einer ersten Landmarke, an der ein Reinigungspfad endet, bis zu einer weiteren Landmarke, an der ein weiterer Reinigungspfad beginnt. Hierbei kann der Transportpfad insbesondere zur Leerfahrt zwischen Landmarken innerhalb der Reinigungsaufgabe eingesetzt werden.

Mindestens eine Anzeigeeinheit kann eine berührungssensitive Anzeigeeinheit sein. Beispielsweise kommt hierbei ein Touchscreen zum Einsatz, zum Entgegennehmen von Eingaben durch den Benutzer. Dies erlaubt es zum Beispiel, angezeigte Reinigungspfade anzuwählen, um die Reinigungsaufgabe zu erstellen.

Die Anzeigeeinheit bildet vorzugsweise die Bedieneinheit zumindest teilweise aus, zum Beispiel mit dem vorstehend beschriebenen Touchscreen.

Im Hinblick auf eine benutzerfreundliche Handhabung ist es günstig, wenn dem Benutzer an der Anzeigeeinheit eine graphische Oberfläche bereitstellbar ist, zum Suchen einer gespeicherten Landmarke und/oder eines gespeicherten Reinigungspfades. Beispielsweise kann jede Landmarke und/oder jeder Reinigungspfad eine charakteristische Bezeichnung aufweisen, um dem Benutzer die Suche nach der Bezeichnung zu erleichtern.

Die graphische Oberfläche kann zum Beispiel bei Verwendung eines Touchscreens gängige Eingabeelemente wie zum Beispiel Textfelder, Auswahllisten, Symbole, Piktogramme, virtuelle Schaltflächen (Softkeys) oder dergleichen umfassen.

Auch eine Sprachsteuerung des Bodenreinigungsgerätes, insbesondere zum Suchen von Reinigungspfaden, Landmarken und/oder Erstellen von Reinigungsaufgaben kann vorgesehen sein.

Vorgesehen sein kann, dass dem Benutzer an der Anzeigeeinheit eine Karte der Umgebung darstellbar ist, zur Auswahl einer darin dargestellten Landmarke und/oder eines gespeicherten Reinigungspfades. Die Karte kann zum Beispiel eine "einfache" Karte oder eine kombinierte Karte wie vorstehend erläutert sein.

Bei einem Einlern-Vorgang kann der Benutzer vorzugsweise vom Bodenreinigungsgerät zu dessen Führung unterstützt werden. Beispielsweise wird ein Hinweis ausgegeben, wenn der Benutzer einem Hindernis oder einer Begrenzung der Bodenfläche zu nahe kommt und dadurch Lenkmanöver erschwert werden oder nicht möglich sind.

Günstigerweise ist dem Benutzer an der Anzeigeeinheit eine graphische Oberfläche bereitstellbar, zum Darstellen einer Landmarke und/oder eines gespeicherten Reinigungspfades, insbesondere abhängig von einer vorangegangenen Suche. Die Landmarke und/oder der Reinigungspfad werden beispielsweise durch eine Textinformation oder durch eine virtuelle Schaltfläche (beispielsweise als Symbol) dargestellt und können vom Benutzer vorzugsweise ausgewählt werden.

An der Oberfläche sind vorzugsweise Reinigungspfade über Namen und/oder Symbole auswählbar und zur Reinigungsaufgabe verknüpfbar darstellbar. Vorgesehen sein kann zum Beispiel, dass die Reinigungsaufgabe durch aufeinanderfolgende Auswahl von Reinigungspfaden erstellt wird. Die Darstellung des jeweiligen Reinigungspfades kann zum Beispiel dessen Namen und vorzugsweise graphische Informationen über den Verlauf des Pfades umfassen.

Die Reinigungspfade sind vorzugsweise verknüpft mit einer ausgewählten Landmarke darstellbar. Beispielsweise werden nach Auswahl oder Suche einer Landmarke diejenigen Reinigungspfade dargestellt, die dieser Landmarke zugeordnet sind.

Vorgesehen sein kann zum Beispiel, dass nicht der Landmarke zugeordnete Reinigungspfade ausgeblendet sind oder als nicht auswählbar dargestellt sind. In letzterem Fall sind die Reinigungspfade zum Beispiel dargestellt, aber nicht zur Auswahl vorgesehen. Dem Benutzer wird die Bedienung erleichtert, indem die mögliche Auswahl auf die diejenigen Reinigungspfade beschränkt ist, die der Landmarke zugeordnet sind.

Bei Auswahl eines Reinigungspfades an der Anzeigeeinheit sind beispielsweise Informationen über mindestens einen weiteren Reinigungspfad bereitstellbar, der an der Endposition des ausgewählten Reinigungspfades beginnt oder an dessen Endposition der ausgewählte Reinigungspfad beginnt. Dies erleichtert dem Benutzer die Verkettung von Reinigungspfaden zur Reinigungsaufgabe.

Vorgesehen sein kann, dass der mindestens eine Reinigungspfad von einem Benutzer an einer Datenverarbeitungseinrichtung extern zum Bodenreinigungsgerät erstellbar und in der Speichereinheit speicherbar ist.

Günstig kann es sein, wenn das Bodenreinigungsgerät ausgebildet und eingerichtet ist, unter Führung des Benutzers an der Bedieneinheit in einem Einlern-Betriebsmodus (Teach-In) mindestens einen Reinigungspfad zu erstellen und abzuspeichern. Beim Einlernen führt der Benutzer das Bodenreinigungsgerät den gewünschten Fahrweg entlang und stellt die mindestens eine Reinigungseinheit, gegebenenfalls auf unterschiedliche Weise, entsprechend der gewünschten Reinigung ein. Diese Informationen können im Reinigungspfad gespeichert und bei der Abarbeitung wiederholt werden.

Eine Anpassung des Reinigungspfades, beispielsweise des Fahrweges, nach dessen Erstellung kann vorgesehen sein. Hierbei ist eine Optimierung zum Beispiel im Hinblick auf eine Flächendeckung, im Hinblick auf kinematische Randbedingungen, Kollisionsvermeidungen zur Einhaltung einer Randnähe, Sicherheitsanforderungen und/oder im Hinblick auf ein möglichst gutes Reinigungsergebnis denkbar. Beispielsweise werden unplausible und redundante Bewegungen beim Einlernen eliminiert.

Vorgesehen sein kann, dass im Einlern-Betriebsmodus ein vom Bodenreinigungsgerät erkannter Abschnitt der Bodenfläche und/oder ein vom Benutzer entlang eines Umfangs umfahrener Abschnitt der Bodenfläche selbsttätig mit einem Fahrweg des Reinigungspfades belegbar und insbesondere flächendeckend belegbar ist. Derartige Abschnitte, zum Beispiel Freiflächen, müssen dadurch beim Einlernen vom Benutzer nicht vollständig abgefahren werden. Beispielsweise wird die Freifläche vom Bodenreinigungsgerät selbst als solche erkannt, oder der Benutzer verfährt das Bodenreinigungsgerät entlang eines Umfangs der Freifläche. Der Fahrweg kann vom Bodenreinigungsgerät automatisch zum Füllen der Freifläche festgelegt werden.

Die Freifläche kann optional mindestens ein Hindernis umfassen, dessen Position bei der Festlegung des Fahrwegs berücksichtigt werden kann. Das Schließen der Flächengrenzen des Abschnitts kann zum Beispiel automatisch durch eine Verknüpfung einer Startvorgabe und einer Endvorgabe durch den Benutzer erfolgen.

Beim Belegen des Abschnittes der Bodenfläche mit einem Fahrweg ist vom Bodenreinigungsgerät günstigerweise ermittelbar, welche Größe (beispielsweise in Quadratmetern) der Abschnitt aufweist.

Insbesondere basierend auf der letztgenannten Information ist es günstig, wenn beispielsweise an der mindestens einen Anzeigeeinheit dem Benutzer ein Hinweis bereitstellbar ist, welche Menge einer verbrauchbaren Komponente (zum Beispiel elektrische Energie und/oder Reinigungsflüssigkeit) zur Reinigung des Abschnittes erforderlich ist. Der Benutzer kann diese Information für die Planung von Reinigungsaufgaben berücksichtigen, um sicherzustellen, dass zur Durchführung der Reinigungsaufgabe ein hinreichender Vorrat an der verbrauchbaren Komponente mitgeführt wird. Alternativ oder ergänzend kann beispielsweise ein Hinweis bereitstellbar sein, ob die vom Bodenreinigungsgerät mitgeführte Menge einer vorhandenen verbrauchbaren Komponente zur Reinigung des Abschnittes ausreicht. Beispielsweise kann der Benutzer darüber informiert werden, dass die mitgeführte Menge nicht ausreicht und vor der Abarbeitung der Reinigungsaufgabe die verbrauchbare Komponente aufgefüllt werden sollte.

Insbesondere bei den vorteilhaften Ausführungsformen des vorangegangenen Absatzes kann es vorteilhaft sein, wenn das Bodenreinigungsgerät die Menge der mindestens einen verbrauchbaren Komponente basierend auf einem bisherigen Ist-Verbrauch während des Reinigungspfades ermittelt. Die Ermittlung kann zum Beispiel durch direkte Messung des Verbrauchs erfolgen, und/oder relativ in Bezug auf einem maximalen Vorrat der verbrauchbaren Komponente (zum Beispiel voll geladene Batterie oder voller Vorrat an Reinigungsflüssigkeit).

Die Ermittlung kann zum Beispiel unter Berücksichtigung eines Modellwerts durchgeführt werden, der beispielweise einen Standard-Verbrauch, einen ressourcensparenden Eco-Verbrauch, einen Intensiv-Verbrauch mit hoher Reinigungsleistung oder Ähnliches eines Reinigungsvorgangs sein.

Beispielsweise kann mittels des Modellwertes vom Bodenreinigungsgerät eine Vorhersage über eine mit einem vorhandenen Vorrat einer verbrauchbaren Komponente noch reinigbare Fläche getroffen werden. (Rechenbeispiel: maximaler Vorrat abzüglich Ist-Verbrauch = vorhandener Vorrat; auf dieser Grundlage kann unter der Zugrundelegung des Modellwerts, z. B. bei einer typischen Reinigungsgeschwindigkeit, auf die noch reinigbare Fläche geschlossen werden).

Vorteilhaft kann es dementsprechend sein, wenn das Bodenreinigungsgerät beim Einlernen basierend auf dem Modellwert und einem Vorrat der mindestens einen verbrauchbaren Komponente einen noch möglichen Reinigungsfahrweg (z. B. in Metern) oder die Größe einer noch zu reinigenden Fläche (z. B. in Quadratmetern) ermittelt und dem Benutzer an der mindestens einen Anzeigeeinheit hierüber eine Information bereitstellt.

Vorgesehen sein kann, dass das Bodenreinigungsgerät beim Einlernen einen Hinweis für den Benutzer bereitstellt, dass ein von ihm über die Sensoreinheit erfasster Abschnitt der Bodenfläche selbsttätig mit einem Fahrweg belegbar ist.

Der Reinigungspfad kann vorzugsweise nicht allein auf Fahrwege des Bodenreinigungsgerätes über die Bodenfläche beschränkt sein, bei denen mindestens eine Reinigungseinheit aktiviert ist.

Beispielsweise kann der Reinigungspfad ein oder mehrere Segmente aufweisen, wobei an zumindest einem Segment mindestens eine Reinigungseinheit aktiviert ist, wobei für den Reinigungspfad zumindest eines der Folgenden ergänzend gilt:
- An unterschiedlichen Segmenten des Reinigungspfades oder innerhalb eines Segmentes sind verschiedenartige Reinigungseinheiten aktiviert oder deaktiviert. Beispielsweise kann die Bodenfläche an unterschiedlichen Positionen - zum Beispiel entlang verschiedener Segmente oder innerhalb verschiedener Abschnitte eines Segmentes - auf unterschiedliche Weise abgereinigt werden. Hierbei können jeweils unterschiedliche Reinigungseinheiten aktiviert sein, im Fall einer Scheuersaugmaschine zum Beispiel ein Bodenreinigungskopf, ein Seitenbesen oder eine Saugleiste.
- Es existiert mindestens ein Segment, bei dem keine Reinigungseinheit aktiviert ist. Innerhalb eines Reinigungspfades kann zum Beispiel ein Transportsegment ohne Reinigung der Bodenfläche vorgesehen sein, bei dem die Reinigungseinheiten aktiviert oder zumindest in einer Weise geschaltet sind, dass die Bodenfläche nicht über die Reinigungseinheit beaufschlagt ist.
- Im Reinigungspfad sind Bahnen und belegbare Abschnitte der Bodenfläche hinterlegt, zum Beispiel die vorstehend beschriebenen und selbsttätig mit Farbe belegbaren Abschnitte der Bodenfläche (dies kann zum Beispiel als Fill-In-Segment bezeichnet werden). Beispielsweise ist im Reinigungspfad hinterlegt, dass ein bestimmtes Segment ein Fill-In-Segment ist.
- Im Reinigungspfad ist mindestens eine Interaktion des Bodenreinigungsgerätes mit der Umgebung hinterlegt. Hierunter kann vorliegend insbesondere verstanden werden, dass das Bodenreinigungsgerät insbesondere mit Personen in der Umgebung interagieren kann. Das Interaktionsereignis ist zum Beispiel ein vom Bodenreinigungsgerät abzugebender akustischer und/oder optischer Hinweis. Durch den Hinweis können Personen auf das Bodenreinigungsgerät aufmerksam gemacht werden.

Beim Einlernen von Reinigungspfaden können die vorstehend beschriebenen Segmente innerhalb eines Reinigungspfades vorzugsweise beliebig von einem Benutzer miteinander verbunden werden. Interaktionsereignisse können ebenso gespeichert werden wie Bahnen und belegbare Abschnitte der Bodenfläche. Ferner versteht es sich, dass Transportsegmente oder Segmente oder Abschnitte eines Segmentes, bei denen unterschiedliche Reinigungseinheiten aktiviert sind, im Reinigungspfad gespeichert werden können.

Beim Einlernen kann der Benutzer vorzugsweise im Einlern-Betriebsmodus, Vorgaben an der Bedieneinheit machen. Beispielsweise führt die Aktivierung einer Reinigungseinheit zu einem Reinigungssegment, eine Fahrt bei Deaktivierung der Reinigungseinheit zu einem Transportsegment, und/oder eine Fill-In-Vorgabe zu einem Fill-In-Segment. Abhängig von der Vorgabe können die verschiedenartigen Segmente vom Bodenreinigungsgerät vorzugsweise im Reinigungspfad angelegt werden - beispielsweise, jeweils über Teach-In eingelernt, ein Transportsegment, ein Reinigungssegment (ohne Fill-In), ein Fill-In-Segment, ein Reinigungssegment (ohne Fill-In), ein Fill-In-Segment, ein Transportsegment..., oder andersartige Kombinationen von Segmenten. Beliebige Arten von Segmenten könnten auf diese Weise in einem Reinigungspfad eingelernt werden, optional mit mindestens einem Interaktionsereignis. Hierbei werden die Segmente bevorzugt aufgrund der Vorgabe des Benutzers zum Reinigungspfad miteinander verbunden, insbesondere ohne aktives Zutun oder Verketten des Benutzers.

Durch die vorstehenden vorteilhaften Ausführungsformen erweist sich das Bodenreinigungssystem als besonders vielseitig. Innerhalb eines Reinigungspfades können so unterschiedliche Fahr- und/oder Bearbeitungsmodi und/oder Ereignisse vorzugsweise beliebig kombiniert werden, ohne dass hierzu jeweils ein gesonderter Reinigungspfad zu erstellen ist. Dies erweist sich auch als vorteilhaft für die Handhabung angesichts dessen, dass sich die ansonsten aufwändige Verwaltung einer hohen Zahl von Pfaden vermeiden lässt.

Die vorstehend erwähnten Pfadeigenschaften können vorzugsweise sowohl durch Einlernen als auch durch externe Definition des Reinigungspfades außerhalb des Bodenreinigungsgerätes definiert werden.

Beim Verfahren des Bodenreinigungsgerätes ist an der mindestens einen Anzeigeeinheit vorzugsweise ein Hinweis an den Benutzer ausgebbar, das Bodenreinigungsgerät an einer Landmarke so zu positionieren, dass die Landmarke mittels der Sensoreinheit erkennbar ist. Dies dient beispielsweise bei Aufnahme der Reinigungsaufgabe dazu, dass eine korrekte Startposition gesichert ist.

Im Fall der Erfassung der Landmarke ist beispielsweise die Abarbeitung einer an der Landmarke beginnenden Reinigungsaufgabe auslösbar.

Im Fall der Erfassung mindestens einer Landmarke ist vorzugsweise eine Information über die dieser zugeordneten Reinigungspfade an der Anzeigeeinheit darstellbar, vorzugsweise zur Erstellung der Reinigungsaufgabe. Zum Beispiel bietet das Bodenreinigungsgerät bei Erfassung einer Landmarke dem Benutzer selbsttätig geeignete Reinigungspfade an, die mit der Landmarke verknüpft sind.

Bei Führung des Bodenreinigungsgerätes durch den Benutzer ist bei Erfassung mindestens einer Landmarke durch die Sensoreinheit an der Anzeigeeinheit günstigerweise ein Hinweis über die der Landmarke zugeordneten Reinigungspfade bereitstellbar.

Günstig ist es, wenn das Bodenreinigungssystem mindestens eine Andockstation für das Bodenreinigungsgerät umfasst, zum Einnehmen einer definierten Position in einer Andockstellung. Die Andockstation kann bei einer einfachen Ausgestaltung eine Parkstation sein, an der das Bodenreinigungsgerät abgestellt wird oder bei selbsttätigem Verfahren stoppt. Das "Andocken" kann insbesondere bei einer Parkstation berührungslos erfolgen und setzt keinen physischen Kontakt zwischen der Andockstation und dem Bodenreinigungsgerät voraus.

Günstig ist es, wenn die mindestens eine Andockstation eine Landmarke umfasst oder ausbildet. Hierbei ist insbesondere das vorstehend beschriebene Markerelement an der Andockstation angeordnet oder von dieser gebildet.

Dem Bodenreinigungsgerät ist über die mindestens eine Andockstation vorzugsweise mindestens eine zur Abarbeitung der Reinigungsaufgabe erforderliche verbrauchbare Komponente zuführbar, beispielsweise elektrische Energie und/oder eine Reinigungsflüssigkeit. Die verbrauchbare Komponente kann auch als Ressource bezeichnet werden.

Vorzugsweise ist von der mindestens einen Andockstation eine verbrauchte Komponente des Bodenreinigungsgerätes aufnehmbar, zum Beispiel von der Bodenfläche aufgenommene Schmutzflüssigkeit.

Es versteht sich, dass die Andockstation und das Bodenreinigungsgerät zur Erfüllung der vorstehend beschriebenen Aufgaben korrespondierende Anschlusselemente umfassen können, die in der Andockstellung koppeln. Dies ist dem Fachmann bekannt.

Vorgesehen sein kann günstigerweise, dass das Bodenreinigungsgerät so ausgebildet ist, dass an einer jeweiligen Andockstation mindestens eine verbrauchbare Komponente in ausreichender Menge für einen anstehenden Reinigungspfad zugeführt wird und/oder erforderlichenfalls eine verbrauchte Komponente abgeführt wird. Auf diese Weise ist sichergestellt, dass für einen abzuarbeitenden Reinigungspfad ausreichend Ressourcen zur Verfügung stehen und/oder das Bodenreinigungsgerät von verbrauchten Ressourcen befreit ist.

Das Bodenreinigungsgerät ist günstigerweise so ausgebildet, dass bei der Abarbeitung der Reinigungsaufgabe die mindestens eine Andockstation aufsuchbar ist für den Fall, dass die Abarbeitung die Zuführung mindestens einer verbrauchbaren Komponente und/oder die Abgabe mindestens einer verbrauchbaren Komponente erfordert. Denkbar ist zum Beispiel, dass vor Beginn der Reinigungsaufgabe oder während der Abarbeitung vom Bodenreinigungsgerät selbsttätig geprüft wird, ob die erforderlichen verbrauchbaren Komponenten ausreichend sind oder zugeführt werden sollten. Entsprechendes gilt für das Entfernen der verbrauchten Komponente. Die Prüfung kann zum Beispiel während der Abarbeitung eines Reinigungspfades erfolgen. Erforderlichenfalls wird dessen Abarbeitung unterbrochen. Die Prüfung kann zwischen aufeinanderfolgenden Reinigungspfaden erfolgen, so dass das Bodenreinigungsgerät einen neuen Reinigungspfad erst beginnt, wenn Komponenten nachgefüllt oder abgeführt worden sind.

Erforderlichenfalls kann das Bodenreinigungsgerät von einem vorgegebenen Fahrweg abweichen, um eine Andockstation anzufahren.

Günstig kann es sein, wenn die mindestens eine Reinigungsstation gemäß einer Vorgabe im Reinigungspfad ansteuerbar ist, für die Zuführung mindestens einer verbrauchbaren Komponente und/oder für die Abgabe mindestens einer verbrauchten Komponente. Bereits beim Einlernen oder bei der externen Planung des Reinigungspfades kann der Benutzer erforderliche Ressourcen einplanen und dies im Reinigungspfad und/oder in der Reinigungsaufgabe speichern.

Vorzugsweise ist das Bodenreinigungsgerät so ausgebildet, dass es bei der Abarbeitung der Reinigungsaufgabe abhängig von einem noch abzuarbeitenden Rest der Reinigungsaufgabe, selbsttätig eine hierfür erforderliche Menge einer verbrauchbaren Komponente ermittelt und erforderlichenfalls an mindestens einer Andockstation aufnimmt und/oder eine verbrauchte Komponente abgibt, wobei bevorzugt eine übermäßige Aufnahme der verbrauchbaren Komponente vermieden wird. Auf diese Weise können beispielsweise Reinigungsaufgaben zuverlässig und bevorzugt zeitsparend abgearbeitet werden. Stellt das Bodenreinigungsgerät zum Beispiel fest, dass eine verbrauchbare Komponente erforderlich ist, kann diese aufgenommen werden. Hierbei wird günstigerweise nur so viel der verbrauchbaren Komponente aufgenommen, dass der Reinigungspfad und/oder die Reinigungsaufgabe zwar abgearbeitet werden kann/können, aber eine übermäßige Aufnahme vermieden wird. Dadurch kann die Reinigung möglichst rasch fortgesetzt und eine nicht erforderliche Standzeit an der Andockstation kurz ausfallen. Günstigerweise ist ein hinreichender Puffer für die verbrauchbare Komponente vorgesehen, um die Reinigungsaufgabe sicher abschließen zu können.

Vorgesehen sein kann, dass im Reinigungspfad gespeichert ist, vor der Aufnahme und/oder nach der Beendigung an mindestens einer Andockstation verbrauchbare/verbrauchte Komponenten zuzuführen und/oder abzuführen.

Vorgesehen sein kann, dass das Bodenreinigungsgerät mindestens eine Speichereinheit umfasst. Reinigungspfade können auf diese Weise lokal im Bodenreinigungsgerät gespeichert werden.

Bei einer bevorzugten Ausführungsform der Erfindung kann vorgesehen sein, dass mindestens eine Speichereinheit räumlich entfernt vom Bodenreinigungsgerät positioniert ist, wobei zu speichernde oder gespeicherte Informationen über eine Kommunikationseinheit vom Bodenreinigungsgerät an die Speichereinheit und/oder umgekehrt übertragbar sind. Die räumlich vom Bodenreinigungsgerät entfernte Speicherung erlaubt es zum Beispiel, auf technisch einfache Weise Reinigungspfade von verschiedenen Bodenreinigungsgeräten durchführen zu lassen, wobei hierzu die Reinigungspfade nicht in mehreren Bodenreinigungsgeräten gespeichert werden müssen. Dies ist zum Beispiel vorteilhaft bei Einsatzwechseln, Wartungen und/oder Störungen von Bodenreinigungsgeräten.

Vorgesehen sein kann, dass das Bodenreinigungsgerät mindestens eine Anzeigeeinheit umfasst, die vorzugsweise an der Bedieneinheit angeordnet ist und beispielsweise einen Teil der Bedieneinheit oder die Bedieneinheit insgesamt ausbilden kann.

Bei einer bevorzugten Ausführungsform der Erfindung kann vorgesehen sein, dass mindestens eine Anzeigeeinheit räumlich entfernt vom Bodenreinigungsgerät positioniert ist, wobei Bildinformationen vom Bodenreinigungsgerät über eine Kommunikationseinheit an die Anzeigeeinheit übertragbar sind. Auf diese Weise besteht die Möglichkeit der Erstellung der Reinigungsaufgabe und/oder von Reinigungspfaden in einer räumlich entfernten Fernwarte.

Beispielsweise umfasst das Bodenreinigungssystem eine Datenverarbeitungseinrichtung, die die Anzeigeeinheit aufweist. Die Datenverarbeitungseinrichtung kann zentral ausgebildet sein oder räumlich verteilt, zum Beispiel über einen Cloud-Dienst.

Vorgesehen sein kann, dass das Bodenreinigungssystem eine Datenverarbeitungseinrichtung umfasst (zentral und/oder als Cloud-Dienst), die die Speichereinheit aufweist.

Das Bodenreinigungsgerät kann bei einer bevorzugten Ausführungsform der Erfindung als Scheuersaugmaschine ausgestaltet sein. Alternativ kann das Bodenreinigungsgerät zum Beispiel ein Sauggerät für eine Trockenreinigung der Bodenfläche sein.

Die Erfindung betrifft auch ein erfindungsgemäßes Bodenreinigungsgerät, das ein Bodenreinigungsgerät eines Bodenreinigungssystems der vorstehend beschriebenen Art ist. Vorteilhafte Ausführungsformen des erfindungsgemäßen Bodenreinigungsgerätes ergeben sich durch die voranstehenden Erläuterungen.

Das Bodenreinigungsgerät kann insbesondere das Bodenreinigungssystem ausbilden.

Wie eingangs erwähnt, betrifft die vorliegende Erfindung auch ein Verfahren. Ein erfindungsgemäßes Verfahren zum Betreiben eines Bodenreinigungssystems oder Bodenreinigungsgeräts löst die eingangs gestellte Aufgabe dadurch, dass das Bodenreinigungssystem oder ein Bodenreinigungsgerät der vorstehend beschriebenen Art zum Einsatz kommt, wobei in der Speichereinheit mindestens eine charakteristische Landmarke gespeichert ist, der zwei oder mehr Reinigungspfade zugeordnet sind, wobei eine Startposition und/oder eine Endposition des eines jeweiligen Reinigungspfades sich an oder bei der Landmarke befindet, und wobei von einem Benutzer an der Bedieneinheit eine Reinigungsaufgabe durch Verknüpfen von zwei oder mehr aufeinanderfolgend abzuarbeitenden Reinigungspfaden vorgegeben und die Reinigungsaufgabe vom Bodenreinigungsgerät selbsttätig abgearbeitet wird.

Vorteilhafte Ausführungsbeispiele des Verfahrens ergeben sich durch vorteilhafte Ausführungsformen des erfindungsgemäßen Bodenreinigungssystems und/oder Bodenreinigungsgerätes.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung eines erfindungsgemäßen Bodenreinigungsgerätes;
- Figur 2:: eine schematische Teildarstellung eines erfindungsgemäßen Bodenreinigungssystems, umfassend das Bodenreinigungsgerät aus Figur 1;
- Figur 3A:: eine schematische Darstellung einer Karte der Umgebung des Bodenreinigungsgerätes aus Figur 1;
- Figur 3B:: eine schematische Darstellung einer aus zwei Karten kombinierten Karte der Umgebung des Bodenreinigungsgerätes aus Figur 1;
- Figuren 3C und 3D:: eine jeweilige schematische Darstellung einer Karte der Umgebung des Bodenreinigungsgerätes aus Figur 1;
- Figur 3E:: eine schematische Darstellung einer kombinierten Karte der Umgebung des Bodenreinigungsgerätes aus Figur 1;
- Figur 4:: eine Ansicht einer Anzeigeeinheit des Bodenreinigungsgerätes mit der Möglichkeit der Suche nach Landmarken und Reinigungspfaden;
- Figur 5:: eine weitere Darstellung der Anzeigeeinheit nach Auswahl des Markers Nr. 1 und Auswahl von Reinigungspfaden;
- Figur 6:: eine weitere Darstellung der Anzeigeeinheit mit Hinweis zur Positionierung des Bodenreinigungsgerätes an einem Marker;
- Figur 7:: eine Darstellung entsprechend Figur 6 nach Erkennen des Markers durch das Bodenreinigungsgerät;
- Figur 8:: eine schematische Darstellung zur Erläuterung eines Einlernens eines Reinigungspfades;
- Figuren 9 und 10:: weitere schematische Darstellungen zur Erläuterung des Einlernens eines Reinigungspfades; und
- Figur 11:: ein erfindungsgemäßes Bodenreinigungssystem, umfassend ein erfindungsgemäßes Bodenreinigungsgerät.

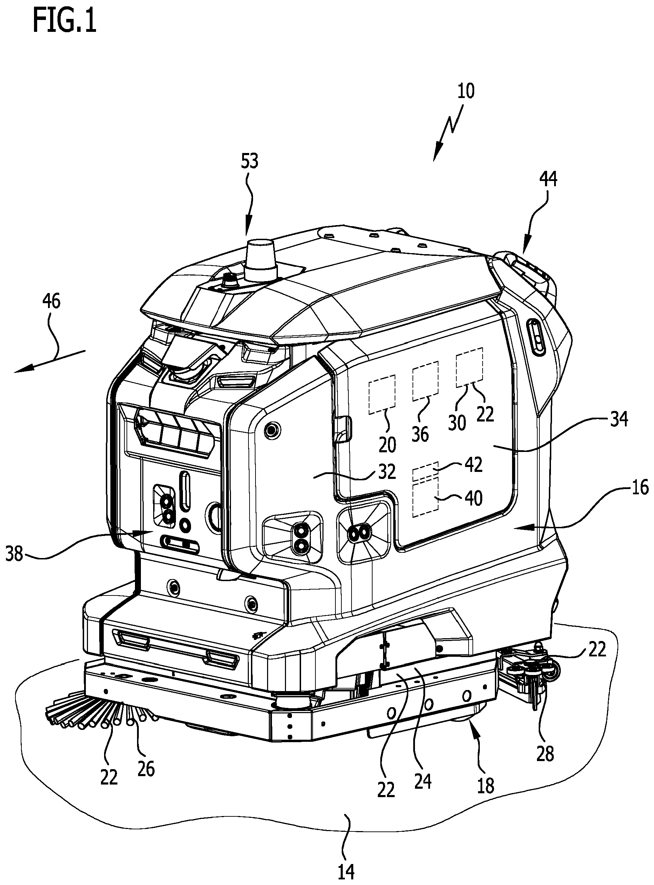

Figur 1 zeigt eine insgesamt mit dem Bezugszeichen 10 belegte vorteilhafte Ausführungsform eines erfindungsgemäßen Bodenreinigungsgerätes. Das Bodenreinigungsgerät 10 kann für sich alleine ein erfindungsgemäßes Bodenreinigungssystem in bevorzugter Ausführungsform ausbilden, ohne weitergehende Komponenten desselben.

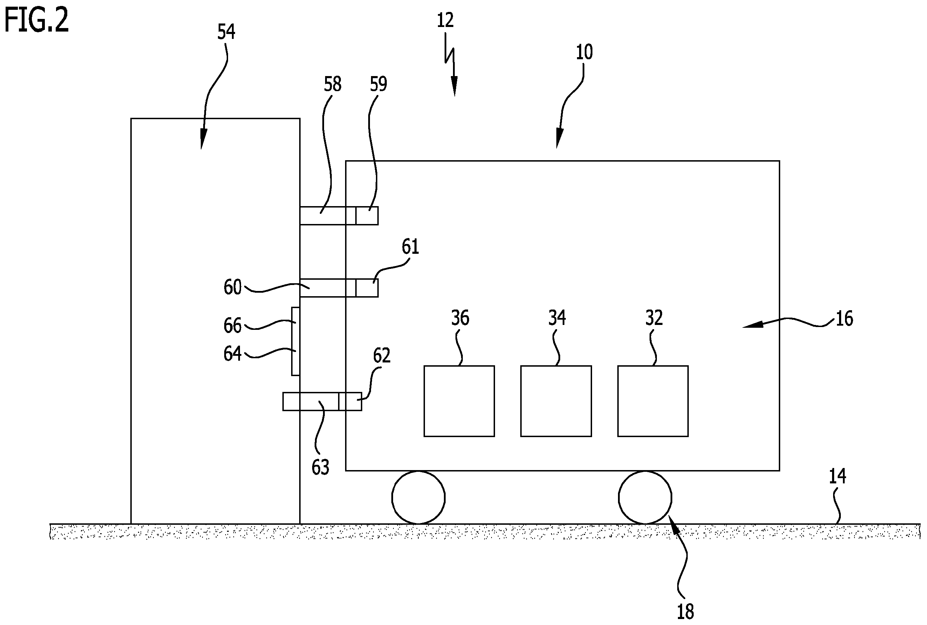

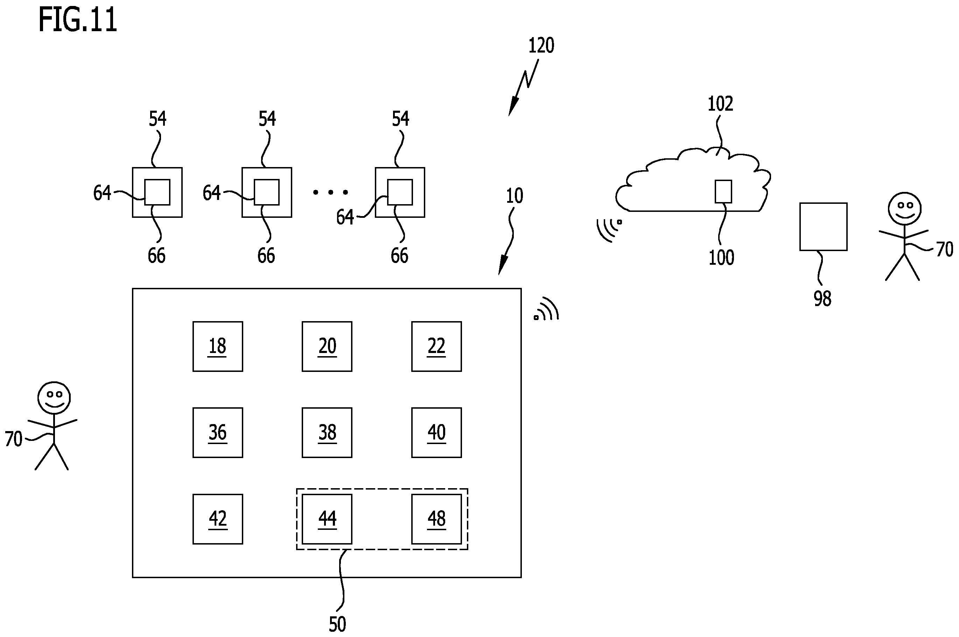

Alternativ oder ergänzend kann das Bodenreinigungsgerät 10 Bestandteil eines weiteren, in Figur 2 schematisch dargestellten erfindungsgemäßen Bodenreinigungssystems 12 und/oder eines in Figur 11 schematisch dargestellten erfindungsgemäßen Bodenreinigungssystems 120 jeweils in bevorzugter Ausführungsform sein.

Das Bodenreinigungsgerät 10 ist selbstfahrend und selbstlenkend ausgestaltet und bildet insbesondere einen Reinigungsroboter. Mit dem Bodenreinigungsgerät 10 kann eine autonome Reinigung einer Bodenfläche 14 durchgeführt werden. Dabei besteht insbesondere die Möglichkeit, mit dem Bodenreinigungsgerät 10 zuvor abgespeicherte Reinigungspfade entlangzufahren und die Bodenfläche 14 zu reinigen. Die Reinigungspfade können durch einen Einlern-Betriebsmodus (Teach-In) eingelernt werden oder vorgegeben werden.

Auf obige Ausführungen zu optionalen, bevorzugten Bestandteilen des Reinigungspfads, insbesondere Segmente mit oder ohne aktivierter Reinigungseinheit, unterschiedlichen aktivierten Reinigungseinheiten und/oder Interaktionsereignissen wird verwiesen.

Wie insbesondere aus den Figuren 1, 2 und 11 hervorgeht, umfasst das Bodenreinigungsgerät 10 ein Gehäuse 16, an dem untenseitig ein Fahrwerk 18 angeordnet ist.

Positions- und Orientierungsangaben beziehen sich auf einen bestimmungsgemäßen Gebrauch des Bodenreinigungsgerätes 10, bei dem dieses über das Fahrwerk 18 auf der Bodenfläche 14 aufstehen kann.

Zur Steuerung sämtlicher Vorgänge umfasst das Bodenreinigungsgerät 10 eine Steuereinheit 20. Zum Reinigen der Bodenfläche 14 umfasst das Bodenreinigungsgerät 10 Reinigungseinheiten 22. Die Reinigungseinheiten 22 umfassen im vorliegenden Beispiel einen Bodenreinigungskopf 24 mit in der Zeichnung nicht dargestellten Walzenbürsten, einen Seitenbesen 26, eine Saugleiste 28 und ein Saugaggregat 30 zum Beaufschlagen der Saugleiste 28 mit Unterdruck.

Das Bodenreinigungsgerät 10 umfasst einen Vorratsbehälter 36 für eine Reinigungsflüssigkeit, insbesondere Wasser. Die Bodenfläche 14 wird mit dem Gemisch aus Wasser und gegebenenfalls einer Reinigungschemikalie benetzt. Der Schmutz wird mit den Reinigungseinheiten 22 abgelöst und, über die Saugleiste 28 und unter der Wirkung des Saugaggregates 30, in einen Schmutzflüssigkeitsbehälter 34 überführt.

Zur Energieversorgung umfasst das Bodenreinigungsgerät 10 eine wiederaufladbare insbesondere elektrische Batterie 36. Die Reinigungsflüssigkeit und die elektrische Energie sind verbrauchbare Komponenten oder Ressourcen des Bodenreinigungsgerätes. Eine verbrauchte Komponente ist die von der Bodenfläche 14 aufgenommene Schmutzflüssigkeit.

Weiter umfasst das Bodenreinigungsgerät 10 eine Sensoreinheit 38, die zum Beispiel mindestens ein Stereokamerasystem, ein Lidarsystem und/oder ein Ultraschallsystem umfassen kann. Anhand mindestens eines Signals der Sensoreinheit 38 kann die Steuereinheit 20 das Bodenreinigungsgerät 10 in seiner Umgebung lokalisieren und/oder navigieren.

Das Bodenreinigungsgerät 10 umfasst ferner eine Speichereinheit 40. In der Speichereinheit 40 können insbesondere charakteristische Landmarken und Reinigungspfade gespeichert werden.

Ferner kann das Bodenreinigungsgerät 10 eine Kommunikationseinheit 42 umfassen, über die kabellos und/oder kabelgebunden Informationen vom Bodenreinigungsgerät 10 und an das Bodenreinigungsgerät 10 übertragen werden können.

Außerdem weist das Bodenreinigungsgerät 10 eine Bedieneinheit 44 auf, die bezogen auf eine Vorwärtsrichtung 46 an der Rückseite angeordnet ist. Eine ansteuerbare Anzeigeeinheit 48 ist vorgesehen, die Bestandteil der Bedieneinheit 44 sein kann oder diese zumindest teilweise ausbilden kann. Dies ist in Figur 11 schematisch durch eine gestrichelte Linie 50 gekennzeichnet.

Die Anzeigeeinheit 48 ist im vorliegenden Fall berührungssensitiv ausgestaltet und insbesondere ein Touchscreen 52 mit Bildanzeige, die vorzugsweise farbig ist. Der Touchscreen 52 erlaubt die Entgegennahme von Eingaben des Benutzers über eine graphische Oberfläche mit geläufigen Textfeldern oder Schaltflächen (Softkeys).

Das Bodenreinigungsgerät 10 kann eine Hinweiseinheit 53 aufweisen, die zum Beispiel optisch und/oder akustisch ausgestaltet ist. Beispielsweise ist ein Lautsprecher oder eine Hupe vorgesehen und/oder ein Blinklicht oder ein Scheinwerfer. Über die Hinweiseinheit 53 kann ein Interaktionsereignis ausgegeben werden, um Personen in der Umgebung auf das Bodenreinigungsgerät 10 aufmerksam zu machen.

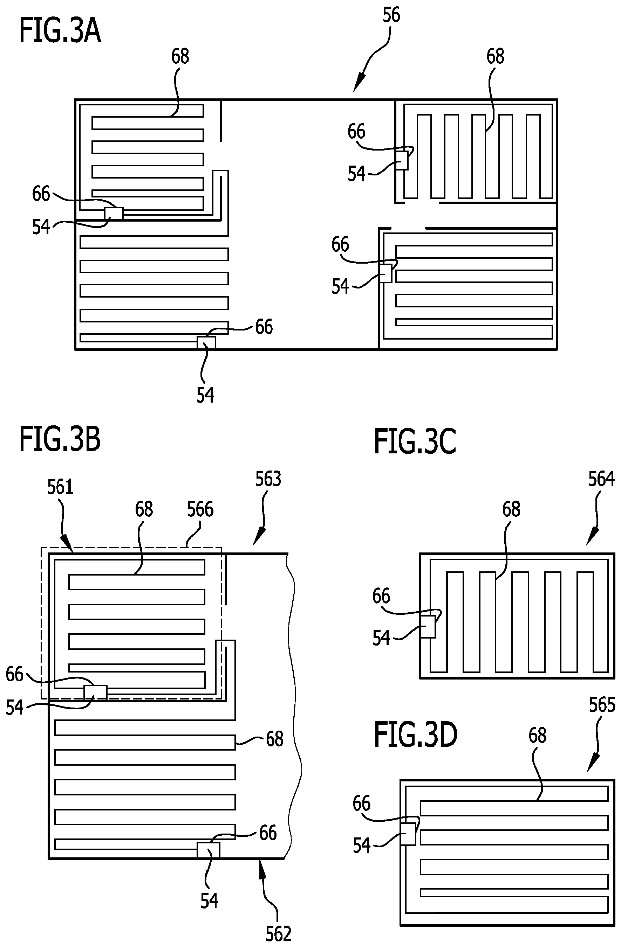

Das Bodenreinigungssystem 12 umfasst mindestens eine Andockstation 54, vorzugsweise eine Mehrzahl von Andockstationen. Beispielsweise zeigt Figur 3A in einer Gesamtkarte 56 der Umgebung des Bodenreinigungsgerätes 10 vier Andockstationen.

Das Bodenreinigungsgerät 10 kann an einer jeweiligen Andockstation 54 eine Andockstellung einnehmen und weist dadurch eine definierte Position relativ zu dieser und innerhalb der Umgebung auf.

Über die Andockstation 54 können elektrische Energie und Reinigungsflüssigkeit als verbrauchbare Komponente zugeführt werden, wenn das Bodenreinigungsgerät 10 die Andockstellung einnimmt. Zu diesem Zweck koppeln Anschlusselemente 58, 59 der Andockstation 54 und des Bodenreinigungsgerätes 10, um die Batterie 36 mit elektrischer Energie zu laden. In entsprechender Weise koppeln Anschlusselemente 60 und 61 des Bodenreinigungsgerätes 10 und der Andockstation 54 zum Zuführen der Reinigungsflüssigkeit in den Vorratsbehälter 32.

Als verbrauchte Komponente kann Schmutzflüssigkeit über Anschlusselemente 62, 63 des Bodenreinigungsgerätes 10 und der Andockstation 54 abgegeben und entsorgt werden.

Das Bodenreinigungssystem 12 umfasst charakteristische Landmarken 64, die mit dem Bodenreinigungsgerät 10 und dem Bodenreinigungssystem 12 zum Einsatz kommen.

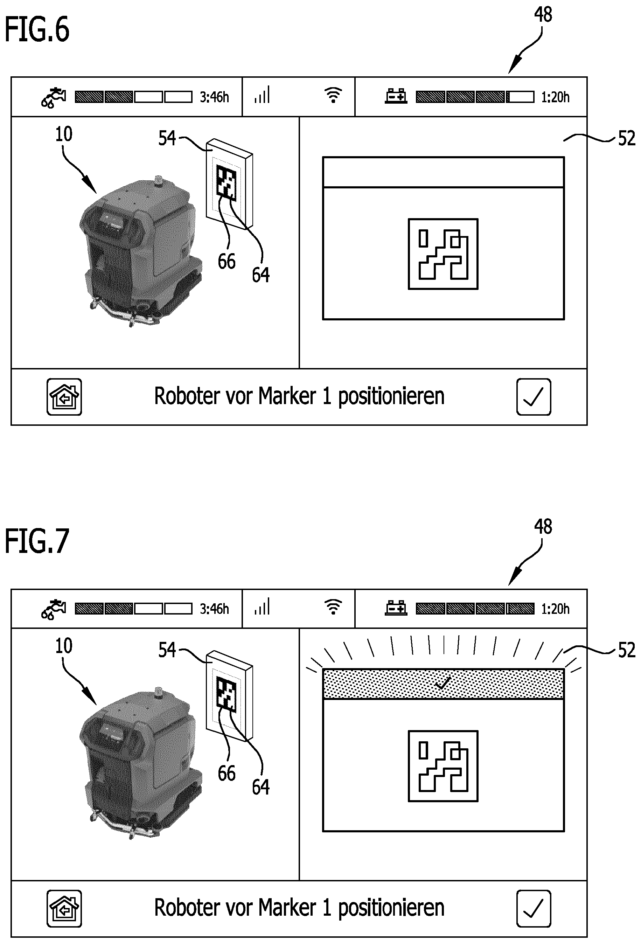

Im vorliegenden Ausführungsbeispiel umfasst eine jeweilige Andockstation 54 eine charakteristische Landmarke 64. Im vorliegenden Beispiel ist die charakteristische Landmarke 64 als Markerelement 66 ausgestaltet (Figuren 6 und 7), das an einer dem Bodenreinigungsgerät 10 zugewandten Seite der Andockstation 54 angeordnet und von dieser umfasst ist.

Bei den vorliegenden bevorzugten Ausführungsformen wird davon ausgegangen, dass die jeweilige Andockstation 54 eine Landmarke 64, zum Beispiel ausgestaltet über das Markerelement 66, umfasst oder bildet. Dies ist, wie vorstehend erläutert, jedoch nur optional. Es können Landmarken 64 unabhängig von einer Andockstation 54 vorgesehen sein. Auch ein Mischfall ist möglich.

Eine Kombination einer Landmarke 64 mit einer Andockstation 54 kann zum Beispiel infrastrukturgebunden sein und beispielsweise dort zum Einsatz kommen, wo eine Andockstation 54 eingerichtet werden kann.

In den Figuren 3A bis 3E wird nicht-einschränkend davon ausgegangen, dass Markerelemente 66 von den Andockstationen 54 umfasst sind. Hiervon abweichend könnte vorgesehen sein, dass mindestens eine Landmarke 64 zum Einsatz kommt, zum Beispiel ein Markerelement 66, die nicht von einer Andockstation 54 umfasst ist.

Es kann mindestens eine Andockstation 54 vorgesehen sein, die wie oben erwähnt zum Parken des Bodenreinigungsgerätes 10 in einer Parkposition dient, wobei keine Zufuhr und/oder Entsorgung einer Ressource möglich ist.

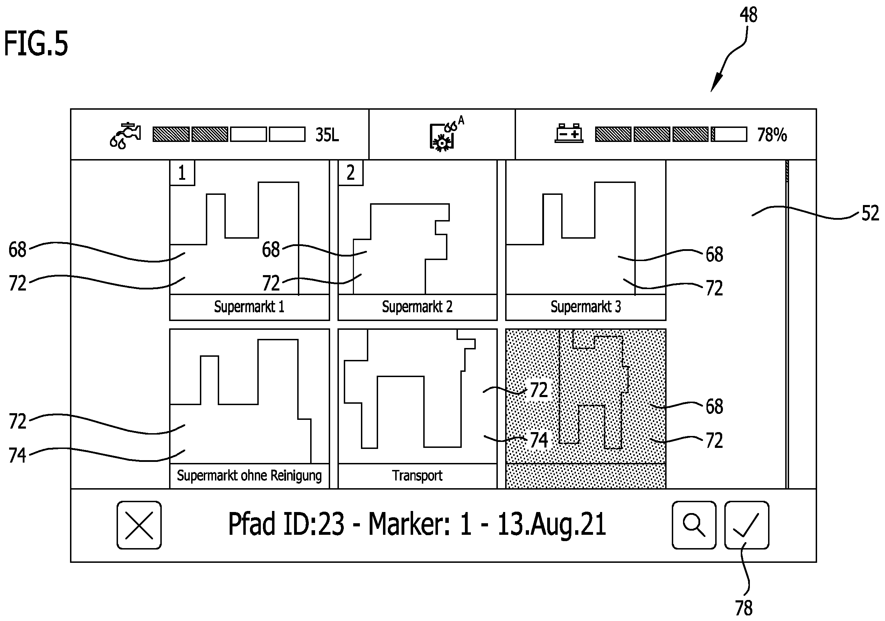

Das Markerelement 66, in den Figuren 5 bis 7 der Anzeigeeinheit 48 als "Marker" bezeichnet, ist vorliegend von der Sensoreinheit 38 optisch erfassbar. Im vorliegenden Beispiel ist das Markerelement 66 ein Matrixcode, beispielsweise ein Aruco-Matrixcode.

Die Markerelemente 66 sind eindeutig, so dass vom Bodenreinigungsgerät 10 bei Erfassen des jeweiligen Markerelementes 66 eine eindeutige Aussage getroffen werden kann, um welche Andockstation 54 es sich handelt. Die Markerelemente 66 sind für sich allein oder in Kombination mit der Andockstation 54 in der Karte 56 gespeichert. Dabei ist die Position des jeweiligen Markerelementes 66 (direkt oder indirekt) in der Karte 56 hinterlegt.

Die Karte 56 gemäß Figur 3A stellt vorliegend die Gesamtumgebung des Bodenreinigungsgerätes 10 dar.

Hierbei sind beispielhaft vier Andockstationen 54 vorgesehen, die in unterschiedlichen Bereichen der Umgebung angeordnet sind. Jede Andockstation 54 weist ein eindeutig identifizierbares Markerelement 66 auf und bildet dadurch jeweils eine charakteristische Landmarke 64.

Die Karte 56 umfasst insgesamt vier einzelne Karten 561, 562, 564 und 565, die in den Figuren 3B bis 3D dargestellt sind.

Die Karten 561 und 562 können ihrerseits zu einer kombinierten Karte 563 gemäß Figur 3B kombiniert werden. Eine gestrichelte Linie 566 in Figur 3B deutet den Umfang der Karte 561 an. Abweichend von der Darstellung verläuft allerdings die Grenze der Karte 561, entsprechend wie bei den Figuren 3C und 3D, entlang der Begrenzungen der Bodenfläche. Der zu diesen Begrenzungen bestehende Versatz der Linie 566 dient vorliegend nur der erkennbaren Kennzeichnung der Karte 561.

Eine jeweilige Karte 561, 563, 564 und 565 bildet eine Umgebung mindestens eines Markerelementes 66 ab.

Das Bodenreinigungsgerät 10 ist in der Lage, autonom innerhalb der Umgebung zu navigieren. Hierbei kann eine der Karten 56, 561 bis 565 herangezogen werden. Eine Position innerhalb der Umgebung, die das Bodenreinigungsgerät 10 in der jeweiligen Karte 56, 561 bis 565 ausmachen kann, erlaubt die Verknüpfung zwischen der jeweiligen Karte und der Umgebung. Dies gilt insbesondere für die Markerelemente 66 und die Andockstationen 54, deren Positionen innerhalb der jeweiligen Karte 56, 561 bis 565 bekannt sind.

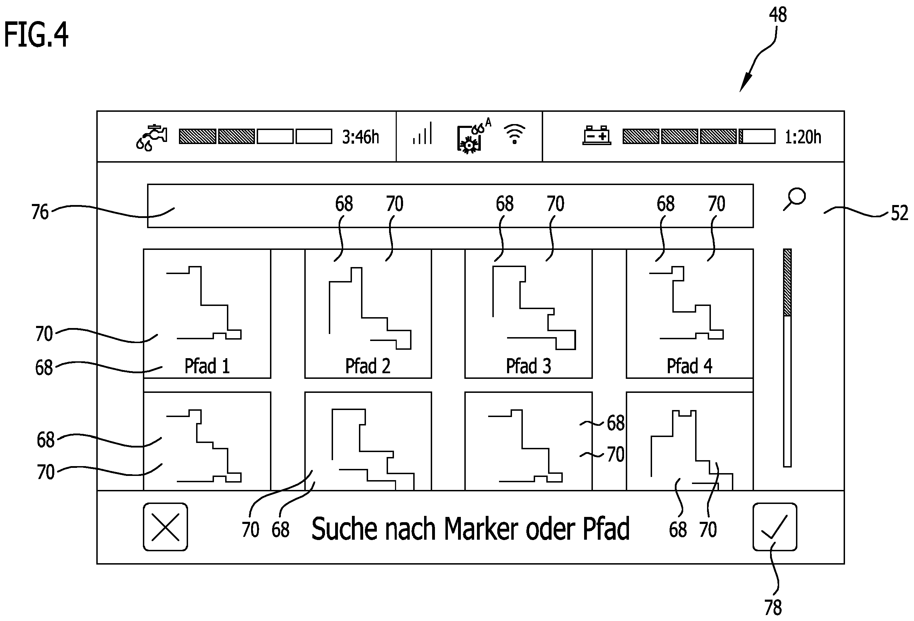

Wie bereits erwähnt, können vom Bodenreinigungsgerät 10 Reinigungspfade, die zuvor in der Speichereinheit 40 gespeichert wurden, abgearbeitet und dabei die Bodenfläche 14 gereinigt werden. Die Figuren 4 und 5 zeigen schematisch Reinigungspfade 68. Hierunter ist vorliegend zu verstehen, dass an der Anzeigeeinheit 48 dem Benutzer 70 (Figur 11) Symbole 72 angezeigt werden können, die jeweils mit einem gespeicherten Reinigungspfad 68 verknüpft sind.

Der Reinigungspfad 68 umfasst eine Information über den Fahrweg des Bodenreinigungsgerätes 10 und vorzugsweise über den Einsatz mindestens einer Reinigungseinheit 22.

Darüber hinaus kann in der Speichereinheit 40 beispielsweise ein Transportpfad 74 (Figur 5) gespeichert sein. Auch der Transportpfad 74 kann zum Beispiel über ein Symbol 72 dargestellt werden. Im Transportpfad 74 ist zum Beispiel der Fahrweg gespeichert. Jedoch ist keine Reinigung vorgesehen, so dass keine Information über die Reinigungseinheiten 22 gespeichert ist oder alternativ die Information, dass keine Reinigungseinheit 22 in Betrieb ist.

Gemäß der vorliegenden Erfindung sind die Reinigungspfade 68 den Markerelementen 66 zugeordnet, wobei die Zuordnung in der Speichereinheit 40 gespeichert ist. Dadurch ist bekannt, an welchem Markerelement 66 die Startposition und/oder die Endposition welches Reinigungspfades 68 liegt.

Hierbei kann vorgesehen sein, dass der Reinigungspfad 68 an demselben Markerelement 66 startet und endet. Alternativ kann zum Beispiel vorgesehen sein, dass der Reinigungspfad 68 an einem Markerelement 66 beginnt und an einem weiteren, hiervon unterschiedlichen Markerelement 66 endet.

Die Figuren 3A bis 3D zeigen für die beiden vorstehend genannten Fälle beispielhafte Darstellungen. Beispielsweise ist in den Karten 561, 564 und 565 jeweils ausgehend von einem Markerelement 66 der Andockstation 54 ein Reinigungspfad 68 gezeigt. Hierbei liegt die Startposition und die Endposition jeweils am Markerelement 66 der Andockstation 54.

In der Karte 562 demgegenüber sind zwei Andockstationen 54 gespeichert. Ein Reinigungspfad 68 weist seine Startposition an dem Markerelement 66 der in der Zeichnung oben dargestellten Andockstation 54 auf und seine Endposition an dem Markerelement 66 der in der Zeichnung unten dargestellten Andockstation 54, oder umgekehrt. Dieser Reinigungspfad 68 verläuft daher zwischen unterschiedlichen Markerelementen 66.

Die Karten 561, 562 können zur kombinierten Karte 563 kombiniert werden, indem die in der Zeichnung obere Andockstation 54 gewissermaßen als "Ankerpunkt" dient, anhand dessen die Verknüpfung der Karten 561 und 562 klar definiert ist. Die Ankerpunkte erleichtern die Kombination. Wie bereits erwähnt kann eine Kombination bevorzugt auch möglich sein, wenn zumindest ein Teil der Umgebungsmerkmale innerhalb der jeweiligen Karten (Sichtbereiche) übereinstimmt.

Die Karte 562 ist aufgrund endlichen Sichtfeldes und Reichweite der Sensoreinheit 38 rechts offen.

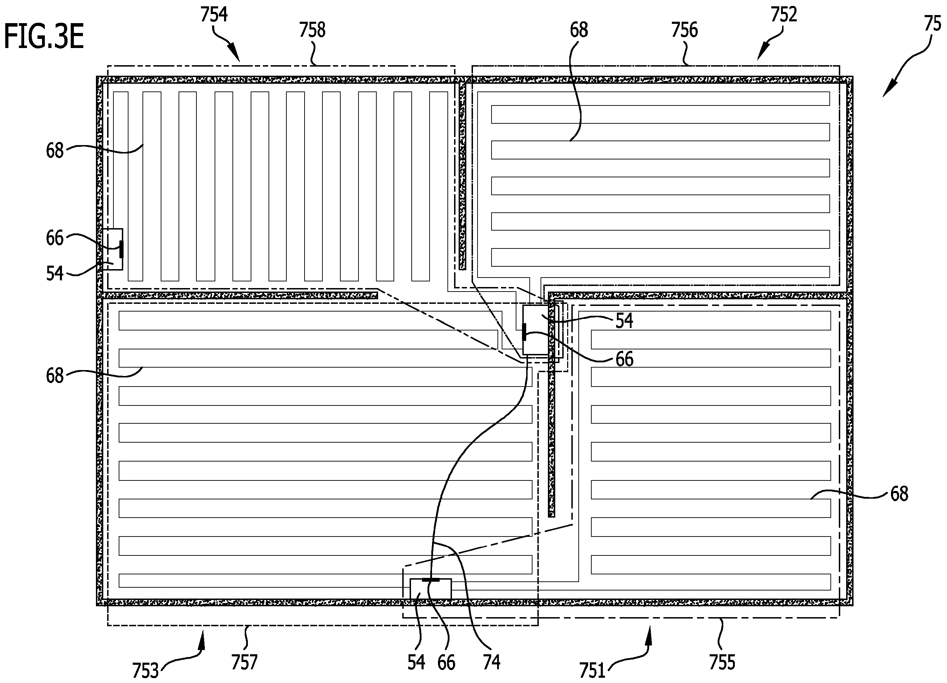

Figur 3E zeigt eine kombinierte Karte 75, die aus einer ersten Karte 751, einer zweiten Karte 752, einer dritten Karte 753 und einer vierten Karte 784 kombiniert ist. Die gestrichelten bzw. strichpunktierten Linie(n) 755, 756, 757 bzw.

758 fassen/fasst jeweils ungefähr den Umfang der Karten 751 bis 754 ein, wobei hier zum Zwecke der Darstellung wie im vorigen Fall ein Versatz zu den Begrenzungen der Bodenfläche eingehalten wurde.

In der Karte 751 ist eine Andockstation 54 mit Markerelement 66 gespeichert sowie ein Reinigungspfad 68, der an dieser Andockstation 54 (unten mittig in Figur 3E) startet und endet.

In der Karte 752 ist eine Andockstation 54 mit Markerelement 66 sowie ein Reinigungspfad 68 gespeichert, der an dieser Andockstation 54 (zentral in Figur 3E) startet und endet.

In der Karte 753 sind die beiden vorstehend genannten Andockstationen 54 mit jeweiligem Markerelement 66 gespeichert sowie ein Reinigungspfad 68, der am einen Markerelement 66 startet und am anderen Markerelement 66 endet.

In der Karte 754 ist die zentral dargestellte Andockstation 54 sowie eine weitere Andockstation 54 (oben links) mit jeweiligem Markerelement 66 gespeichert sowie ein Reinigungspfad 68, der an einem Markerelement 66 startet und am anderen Markerelement 66 endet. Der letztgenannte Reinigungspfad 68 ist bevorzugt auch in den Karten 752 und 753 gespeichert, der zentralen Andockstation 54 mit Markerelement 66 zugeordnet.

Anhand von Figur 3E ist ersichtlich, dass die Fahrwege der Reinigungspfade 68 jeweils mäanderförmig verlaufen können, wobei hier insbesondere, jedoch nicht-einschränkend, zwei Vorzugsrichtungen der Mäanderbahnen vorgesehen sind.

Die Sichtbereiche innerhalb von zumindest zwei oder mehr der Karten 751, 752, 753 und 754 überlappen teilweise. Die Markerelemente 66 der Andockstationen 54 zentral und unten in der Mitte sind jeweils in mindestens zwei Karten 751, 752, 753 oder 754 gespeichert und können als zuverlässige Ankerpunkte für die Kombination zur Karte 75 dienen.

Leerfahrten oder Transportfahrten zwischen Markerelementen 66 können beispielsweise, wenn nicht gereinigt werden soll, über einen Transportpfad 74 abgebildet werden und der Reinigungsaufgabe hinzugefügt werden. Dies ist in Figur 3E beispielhaft über einen zwischen zwei Andockstationen 54 (zentral und unten in der Mitte) verlaufenden Transportpfad 74 dargestellt. Der Transportpfad 74 ist bevorzugt in den Karten 751, 752 und 753 gespeichert.

Beim Bodenreinigungsgerät 10 und beim Bodenreinigungssystem 12 können Reinigungspfade 68 benutzerfreundlich zur Definition von Reinigungsaufgaben miteinander verknüpft werden. Dies kann benutzerfreundlich über die graphische Oberfläche der Anzeigeeinheit 48 durch Auswahl der gewünschten Reinigungspfade 68 erfolgen. Durch die Zuordnung der Reinigungspfade 68 jeweils zu einem Markerelement 66 wird dem Benutzer 70 die Erstellung der Reinigungsaufgabe erleichtert, indem Informationen über die Startposition und die Endposition des jeweiligen Reinigungspfades 68 an dem Markerelement 66 oder an einem weiteren Markerelement 66 vorliegen.

Nachfolgend werden die Erstellung und das Starten einer Reinigungsaufgabe beispielhaft insbesondere anhand der Figuren 4 bis 7 erläutert.

Zum Erstellen der Reinigungsaufgabe kann der Benutzer 70 an der Anzeigeeinheit 48 eine Übersicht der gespeicherten Reinigungspfade 68 über die Symbole 72 aufrufen. Es besteht die Möglichkeit, zum Beispiel durch ein Textfeld 76 eine Suche nach Markerelementen 66 und/oder nach Reinigungspfaden 68 durchzuführen und dadurch die in der Speichereinheit 40 hinterlegten Informationen zu filtern.

Es versteht sich, dass vorteilhafterweise auch eine Filterung nach Transportpfaden 74 möglich sein kann.

Beispielsweise weist jeder Reinigungspfad 68 oder Transportpfad 74 eine charakteristische kennzeichnungskräftige Bezeichnung auf. Während in Figur 4 einige Reinigungspfade 68 lediglich als "Pfad 1, 2, 3, 4" gekennzeichnet sind, zeigt Figur 5 dies beispielhaft durch Kennzeichnungen wie "Supermarkt 1" o.Ä.

Das jeweilige Symbol 72 kann eine Miniaturansicht des Reinigungspfades 68 oder Transportpfades 74 oder der Umgebung, in der der Reinigungspfad 68 oder Transportpfad 74 verläuft, darstellen. Auf diese Weise wird dem Benutzer 70 visuell die Auswahl des Reinigungspfades 68 oder Transportpfades 74 erleichtert.

Denkbar ist auch die Auswahl einer Andockstation 54 und mindestens eines mit dieser verknüpften Reinigungspfades 68 über eine gespeicherte Karte. Alternativ oder ergänzend kann vorgesehen sein, dass die Reinigungspfade 68 direkt in der Karte ausgewählt werden können.

Im Beispiel der Figur 4 hat der Benutzer 70 die Liste nach dem Markerelement 66 "Marker 1" gefiltert. Figur 5 stellt das diesbezügliche Ergebnis dar. Mit dem Marker 1 sind im vorliegenden Beispiel drei Reinigungspfade 68 verknüpft, nämlich "Supermarkt 1", "Supermarkt 2" und "Supermarkt 3". Aufgefunden wurden ferner die Transportpfade 74 "Supermarkt ohne Reinigung" und "Transport".

Über die Symbole 72 wählt der Benutzer 70 die gewünschten Reinigungspfade aus, im vorliegenden Beispiel "Supermarkt 1" und "Supermarkt 2", die jeweils in der Reihenfolge ihrer Auswahl gekennzeichnet werden - Ziffern "1" und "2" im jeweiligen Symbol 72.

An der Anzeigeeinheit 48 ist ferner das ausgewählte Markerelement 66 "Marker 1" und der zuletzt ausgewählte Reinigungspfad 68 dargestellt, wobei "Pfad ID: 23" dem Reinigungspfad "Supermarkt 2" entspricht. Durch Bestätigung auf einer Schaltfläche 78 kann die die beiden Reinigungspfade 68 umfassende Reinigungsaufgabe gespeichert und für die Abarbeitung bereitgestellt werden. Eine Auswahl von Transportpfaden 74 ist alternativ oder ergänzend möglich.

Vorgesehen sein kann beispielsweise, dass bei der Anwahl eines jeweiligen Symbols 72 angezeigt wird, ob der Reinigungspfad 68 am Marker 1 startet und/oder endet. Fällt die Startposition mit der Endposition auseinander, kann das jeweilige andere Markerelement (der "Marker") angezeigt werden, an dem die Startposition bzw. die Endposition liegt. Obige Informationen können beispielsweise Bestandteil der Bildinformationen des Symbols 72 sein.

Figur 5 zeigt rechts unten einen nach Filtern der Liste nicht anwählbaren Reinigungspfad 68. Das entsprechende Symbol 72 ist ausgegraut. Der entsprechende Reinigungspfad 68 kann vom Markerelement 66 "Marker 1" nicht gestartet werden oder endet nicht an diesem. Auf diese Weise wird der Benutzer 70 bei der Erstellung der Reinigungsaufgabe unterstützt.

Auch komplexe Reinigungsaufgaben können benutzerfreundlich mit dem erfindungsgemäßen Gerät 10 und dem erfindungsgemäßen System 12 definiert werden. Dabei besteht vorzugsweise nicht nur die Möglichkeit, Reinigungspfade 68 und Transportpfade 74 ausgehend von einem Markerelement 66 miteinander zu verknüpfen, sondern, wie erläutert, auch Reinigungspfade 68 und Transportpfade 74 zu weiteren Markerelementen 66. Auf diese Weise können zum Beispiel mehrere Räume und auch mehrere Stockwerke, die etwa über Rampen erreichbar sind, miteinander verknüpft werden.

Zum Auslösen der Reinigungsaufgabe erhält der Benutzer 70 an der Anzeigeeinheit 48 den Hinweis, das Bodenreinigungsgerät 10 vor dem Markerelement 66 "Marker 1" zu positionieren (Figur 6). Ziel ist es, das korrekte Markerelement 66 mittels der Sensoreinheit 38 zu erfassen und die Position des Bodenreinigungsgerätes 10 zu verifizieren. Die Erkennung des Markerelementes 66 wird dem Benutzer 70 an der Anzeigeeinheit 48 optisch visualisiert, wie rechts in Figur 7 dargestellt. Durch Betätigen einer Schaltfläche 78 kann die Reinigungsaufgabe gestartet werden.

Die Möglichkeit, Andockstationen 54 zu nutzen, kann bei der Abarbeitung und/oder Planung von Reinigungspfaden 68 berücksichtigt werden. Beispielsweise wird vor der Bearbeitung oder nach der Bearbeitung eines Reinigungspfades 68 eine verbrauchbare Komponente zugeführt oder eine verbrauchte Komponente abgeführt. Stellt das Bodenreinigungsgerät 10 während der Abarbeitung der Reinigungsaufgabe fest, dass die Ressourcen nicht ausreichen, kann zum Beispiel eine nahegelegene Andockstation 54 angefahren werden, um die verbrauchbare Komponente zuzuführen und gegebenenfalls eine verbrauchte Komponente abzuführen.

Die Reinigungspfade 68 und Transportpfade 74 können beispielsweise extern definiert und an die Speichereinheit 40 übertragen werden.

Günstigerweise ist das Bodenreinigungsgerät 10 in einem Einlern-Betriebsmodus (Teach-In) betreibbar. Der Benutzer 70 kann das Bodenreinigungsgerät 10 zur Definition eines jeweiligen Reinigungspfads 68 über die Bodenfläche 14 führen. Der Fahrweg wird eingespeichert und ferner eine Information, welche Reinigungseinheit 22 jeweils aktiviert ist. Entsprechendes gilt für Transportpfade 74.

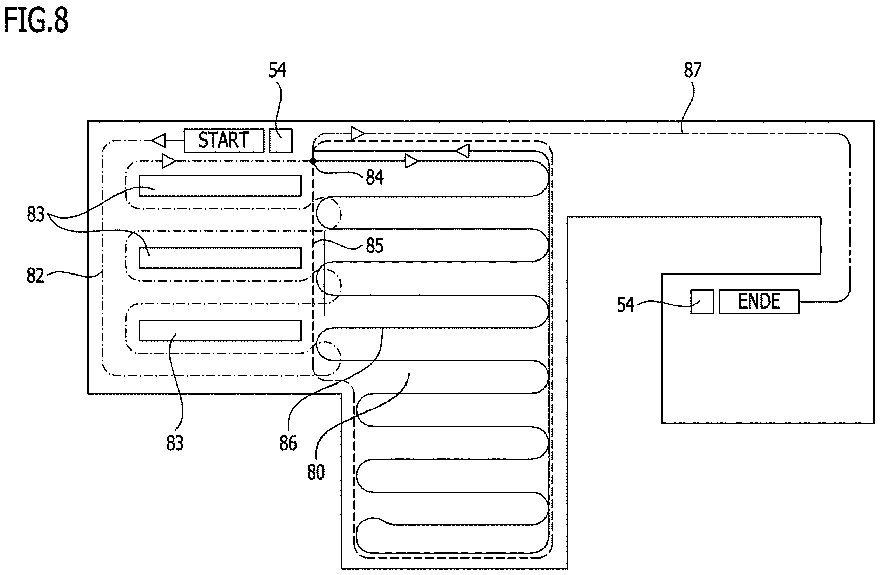

Beim Bodenreinigungsgerät 10 ist vorgesehen, dass Abschnitte 80 der Bodenfläche 14 selbsttätig im Hinblick auf eine möglichst flächendeckende Reinigung mit einem Fahrweg belegt werden können. Dies wird nachfolgend unter Verweis auf die Figuren 8 bis 10 erläutert.

Figur 8 zeigt schematisch den Einlern-Vorgang eines Reinigungspfades 68 ausgehend von einer ersten Andockstation 54.

Zunächst wird das Bodenreinigungsgerät 10 entlang eines Segmentes 82 zwischen Hindernissen 83 hindurch vom Benutzer 70 geführt. Gelangt der Benutzer 70 am Punkt 84 an den Abschnitt 80, der eine Freifläche der Bodenfläche 14 darstellt, verfährt der Benutzer 70 das Bodenreinigungsgerät 10 entlang einem Segment 85 entlang des Umfangs des Abschnittes 80.

Wieder am Punkt 84 angekommen füllt das Bodenreinigungsgerät 10 den Abschnitt 80 automatisch mit einem Fahrweg 86 zur flächendeckenden Bearbeitung des Abschnittes 80. Dieser Fahrweg 86 wird der späteren Abarbeitung des Reinigungspfades 68 zugrunde gelegt.

Ausgehend vom Punkt 84 führt der Benutzer 70 das Bodenreinigungsgerät 10 entlang einem Segment 87 bis zu einer zweiten Andockstation 54, an der der Reinigungspfad 68 endet.

Beim Bodenreinigungsgerät 10 besteht dementsprechend die Möglichkeit, Segmente 82, 87, die vom Benutzer 70 vollständig vorgegeben werden, mit automatisch oder halbautomatisch erstellten Segmenten 85 innerhalb eines Reinigungspfades 68 zu kombinieren.

Vorgesehen sein kann, dass das Bodenreinigungsgerät 10 über die Sensoreinheit 38 Abschnitte 80 der Bodenfläche 14 erfasst, die automatisch mit einem Fahrweg 86 belegt werden können, und dem Benutzer 70 hierüber einen Hinweis an der Anzeigeeinheit 48 bereitstellt. Nach Bestätigung durch den Benutzer 70 kann der Fahrweg über den Abschnitt 80 vom Bodenreinigungsgerät 10 festgelegt werden.

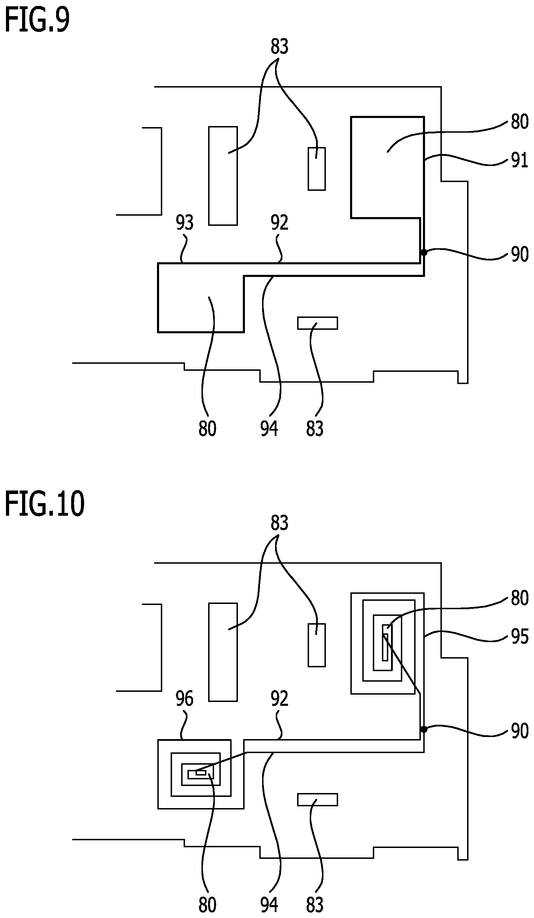

Im Beispiel der Figur 9 startet der Benutzer 70 an einer Startposition 90 und umrundet einen Abschnitt 80 der Bodenfläche 14 (Segment 91). Anschließend verfährt der Benutzer 70 entlang eines Segmentes 92 zu einem weiteren Abschnitt 80 der Bodenfläche 14, den er mit einem Segment 93 umrundet. Anschließend verfährt der Benutzer 70 ein Segment 94 zu einer Endposition entlang, im vorliegenden Fall der Startposition 90.

Die die Abschnitte 80 einfassenden Segmente 91 und 93 werden vom Bodenreinigungsgerät 10 als Freiflächen erkannt und können automatisch mit Fahrwegen 95 bzw. 96 belegt werden, wie in Figur 10 dargestellt. Alternativ kann der Benutzer 70 die Belegung der Abschnitte 80 mit den Fahrwegen 95, 96 auslösen. Es wird jeweils eine flächendeckende Reinigung der Abschnitte 80 erzielt. Die Fahrwege 95, 96 werden im Reinigungspfad 68 für die spätere Abarbeitung gespeichert.

Vorgesehen sein kann, dass beim Erkennen eines Markerelementes 66, wenn das Bodenreinigungsgerät 10 vom Benutzer 70 über die Bodenfläche 14 verfahren wird, automatisch Hinweise über Reinigungspfade 68 an der Anzeigeeinheit 48 dargestellt werden, die diesem Markerelement 66 zugeordnet sind.

Bei dem in Figur 11 dargestellten Bodenreinigungssystem 120 ist räumlich entfernt vom Bodenreinigungsgerät 10 eine Anzeigeeinheit 98 und eine Speichereinheit 100 vorgesehen. Beispielhaft ist die Anzeigeeinheit 98 als Anzeigeeinheit 98 einer Datenverarbeitungseinrichtung 102 gezeigt, bei der es sich zum Beispiel um einen Cloud-Dienst handeln kann. Die Datenverarbeitungseinrichtung 102 umfasst ferner die Speichereinheit 100.

Bildinformationen können vom Bodenreinigungsgerät 10 über die Kommunikationseinheit 42 zur Anzeige an der Anzeigeeinheit 98 übertragen werden. Beispielsweise kann die Reinigungsaufgabe über die Datenverarbeitungseinrichtung 102 erstellt werden. Möglich ist es auch, Reinigungspfade 68 und Transportpfade 74 über die Datenverarbeitungseinrichtung 102 zu erstellen.

In der Speichereinheit 100 können insbesondere die Informationen über die Landmarken 64 und, diesen zugeordnet, Reinigungspfade 68 gespeichert werden. Diesbezügliche Daten können über die Kommunikationseinheit 42 an das Bodenreinigungsgerät 10 übertragen werden. Umgekehrt können Informationen vom Bodenreinigungsgerät 10 in der Speichereinheit 100 gespeichert werden.

Der Einsatz einer externen Speichereinheit 100 ermöglicht es, eine Mehrzahl von Bodenreinigungsgeräten für Reinigungsaufgaben benutzerfreundlich einzusetzen, ohne dass hier jeweils Daten zwischen den Speichereinheiten 40 der Bodenreinigungsgeräte übertragen werden müssen.

### Bezugszeichenliste:

10 Bodenreinigungsgerät
12, 120 Bodenreinigungssystem
14 Bodenfläche
16 Gehäuse
18 Fahrwerk
20 Steuereinheit
22 Reinigungseinheit
24 Bodenreinigungskopf
26 Seitenbesen
28 Saugleiste
30 Saugaggregat
32 Vorratsbehälter
34 Schmutzflüssigkeitsbehälter
36 Batterie
38 Sensoreinheit
40 Speichereinheit
42 Kommunikationseinheit
44 Bedieneinheit
46 Vorwärtsrichtung
48 Anzeigeeinheit
50 gestrichelte Linie
52 Touchscreen
54 Andockstation
56 Karte
561, 562, 564, 565 Karte
563 kombinierte Karte
566 gestrichelte Linie
58, 59, 60, 61, 62, 63 Anschlusselement
64 Landmarke
66 Markerelement
68 Reinigungspfad
70 Benutzer
72 Symbol
74 Transportpfad
75 kombinierte Karte
751, 752, 753, 754 Karte
755, 756, 757, 758 Linie
76 Textfeld
78 Schaltfläche
80 Abschnitt
82, 85, 87, 91, 92, 93, 94 Segment
86, 95, 96 Fahrweg
83 Hindernis
84 Punkt
90 Startposition
98 Anzeigeeinheit
100 Speichereinheit
102 Datenverarbeitungseinrichtung

## Patentansprüche

1. Bodenreinigungssystem, umfassend ein selbstfahrendes und selbstlenkendes Bodenreinigungsgerät (10),
mindestens eine ansteuerbare Anzeigeeinheit (48)
und mindestens eine Speichereinheit (40; 100),
wobei das Bodenreinigungsgerät (10) ein Fahrwerk (18) zum Verfahren auf einer Bodenfläche (14), eine Steuereinheit (20), eine Sensoreinheit (38), mindestens eine Reinigungseinheit (22) und eine Bedieneinheit (44) umfasst,
wobei mittels der Sensoreinheit (38) eine Umgebung zum Lokalisieren und/oder Navigieren des Bodenreinigungsgerätes (10) erfassbar ist, insbesondere während der Bewegung,
wobei in der mindestens einen Speichereinheit (40) Reinigungspfade (68) für das Bodenreinigungsgerät (10) mit einer jeweiligen Information über einen Fahrweg und vorzugsweise den Einsatz mindestens einer Reinigungseinheit (22) gespeichert sind,
wobei von einem Benutzer (70) an der Bedieneinheit (44) eine Reinigungsaufgabe durch Verknüpfen von zwei oder mehr aufeinanderfolgend abzuarbeitenden Reinigungspfaden (68) vorgebbar und die Reinigungsaufgabe vom Bodenreinigungsgerät (10) selbsttätig abarbeitbar ist, wobei in der Speichereinheit (40) mindestens eine anhand der Sensoreinheit (38) erfassbare charakteristische Landmarke (64) gespeichert ist, der zwei oder mehr Reinigungspfade (68) zugeordnet sind, wobei eine Startposition und/oder eine Endposition eines jeweiligen Reinigungspfades (68) sich an oder bei der Landmarke (64) befindet,
und wobei dem Benutzer (70) an der mindestens einen Anzeigeeinheit (48) eine Auswahl der der jeweiligen Landmarke (64) zugeordneten Reinigungspfade (68) bereitstellbar ist.

2. Bodenreinigungssystem nach Anspruch 1, **dadurch gekennzeichnet, dass** zumindest eines der Folgenden gilt:
- in der Speichereinheit (40) sind zwei oder mehr anhand der Sensoreinheit (38) erfassbare charakteristische Landmarken (64) gespeichert, wobei zumindest einer Landmarke (64) zwei oder mehr Reinigungspfade (68) zugeordnet sind;
- das Bodenreinigungssystem umfasst mindestens eine Landmarke (64), die vorzugsweise als ein von der Sensoreinheit (38) optisch und/oder elektrisch und/oder elektromagnetisch erfassbares Markerelement (66) ausgestaltet ist, wobei das Markerelement (66) insbesondere ein Matrixcode oder ein Barcode ist.
- als Landmarke (64) ist mindestens ein charakteristisches Merkmal einer Umgebung des Bodenreinigungsgerätes (10) verwendbar.

3. Bodenreinigungssystem nach einem der voranstehenden Ansprüche, **dadurch gekennzeichnet, dass** zumindest eines der Folgenden gilt:
- die Reinigungsaufgabe ist in der mindestens einen Speichereinheit (40; 100) speicherbar;
- in der Speichereinheit (40) ist mindestens einer Landmarke (64) zugeordnet eine Karte (56, 561, 562, 564, 565, 75, 751, 752, 753, 754) der Umgebung gespeichert, in der die der Landmarke (64) zugeordneten Reinigungspfade (68) gespeichert sind;
- in der Speichereinheit (40) ist eine kombinierte Karte (56, 561, 562, 564, 565, 75, 751, 752, 753, 754) gespeichert, in der mindestens eine Landmarke (64) und die dieser Landmarken (64) zugeordneten Reinigungspfade (68) gespeichert sind;
- Reinigungspfade (68) sind vorgesehen und der mindestens einen Landmarke (64) zugeordnet, die eine Startposition und ihre Endposition an der Landmarke (64) aufweisen, und/oder es sind Reinigungspfade (68) vorgesehen, die eine Startposition an einer Landmarke (64) aufweisen und eine Endposition an einer weiteren Landmarke (64).

4. Bodenreinigungssystem nach einem der voranstehenden Ansprüche, **dadurch gekennzeichnet, dass** das Bodenreinigungsgerät (10) durch einen Benutzer (70) handgeführt ist, insbesondere dass zumindest eines der Folgenden gilt:
- das Bodenreinigungsgerät (10) ist vom Benutzer (70) ausgehend von einer aktuellen Ausgangsposition zu einer Landmarke (64) führbar, ausgehend von der die Reinigungsaufgabe begonnen wird;
- das Bodenreinigungsgerät (10) ist vom Benutzer (70) nach Abschluss der Reinigungsaufgabe von einer Landmarke (64) zu einer Abstellposition führbar;
- das Bodenreinigungsgerät (10) ist vom Benutzer (70) von einer ersten Landmarke (64), an der ein Reinigungspfad (68) endet, bis zu einer weiteren Landmarke (64) führbar, an der ein weiterer Reinigungspfad (68) beginnt.

5. Bodenreinigungssystem nach einem der voranstehenden Ansprüche, **dadurch gekennzeichnet, dass** in der mindestens einen Speichereinheit (40; 100) mindestens ein Transportpfad (74) ohne Einsatz der mindestens einen Reinigungseinheit (22) verknüpft mit zumindest einer Landmarke (64) gespeichert ist, der vom Benutzer (70) insbesondere als Bestandteil der Reinigungsaufgabe vorgebbar ist.

6. Bodenreinigungssystem nach einem der voranstehenden Ansprüche, **dadurch gekennzeichnet, dass** zumindest eines der Folgenden gilt:
- dem Benutzer (70) ist an der Anzeigeeinheit (48) eine graphische Oberfläche bereitstellbar, zum Suchen einer gespeicherten Landmarke (64) und/oder eines gespeicherten Reinigungspfades (68);
- dem Benutzer (70) ist an der Anzeigeeinheit (48) eine Karte (56, 561, 562, 564, 565, 75, 751, 752, 753, 754) der Umgebung darstellbar, zur Auswahl einer darin dargestellten Landmarke (64) und/oder eines gespeicherten Reinigungspfades (68).

7. Bodenreinigungssystem nach einem der voranstehenden Ansprüche, **dadurch gekennzeichnet, dass** zumindest eines der Folgenden gilt:
- dem Benutzer (70) ist an der Anzeigeeinheit (48) eine graphische Oberfläche bereitstellbar zum Darstellen von Informationen betreffend eine Landmarke (64) und/oder einen gespeicherten Reinigungspfad (68), insbesondere abhängig von einer vorangegangenen Suche und/oder Auswahl in einer Karte (56, 561, 562, 564, 565, 75, 751, 752, 753, 754);
- an der Oberfläche sind Reinigungspfade (68) über Namen und/oder Symbole (72) auswählbar und zur Reinigungsaufgabe verknüpfbar darstellbar;
- die Reinigungspfade (68) sind verknüpft mit einer ausgewählten Landmarke (64) darstellbar, wobei insbesondere nicht der Landmarke (64) zugeordnete Reinigungspfade (68) ausgeblendet sind oder als nicht auswählbar dargestellt sind;
- der mindestens eine Reinigungspfad (68) ist von einem Benutzer (70) an einer Datenverarbeitungseinrichtung (102) extern zum Bodenreinigungsgerät (10) erstellbar und in der mindestens einen Speichereinheit (40; 100) speicherbar.

8. Bodenreinigungssystem nach einem der voranstehenden Ansprüche, **dadurch gekennzeichnet, dass** zumindest eines der Folgenden gilt:
- das Bodenreinigungsgerät (10) ist ausgebildet und eingerichtet, unter Führung des Benutzers (70) an der Bedieneinheit (44) in einem Einlern-Betriebsmodus mindestens einen Reinigungspfad (68) zu erstellen und abzuspeichern, wobei vorzugsweise im Einlern-Betriebsmodus ein vom Bodenreinigungsgerät (10) erkannter Abschnitt (80) der Bodenfläche (14) und/oder ein vom Benutzer (70) entlang eines Umfangs umfahrener Abschnitt (80) der Bodenfläche (14) selbsttätig mit einem Fahrweg (86, 95, 96) des Reinigungspfades (68) insbesondere flächendeckend belegbar ist;
- insbesondere an der mindestens einen Anzeigeeinheit (48; 98) ist dem Benutzer (70) ein Hinweis bereitstellbar, welche Menge einer verbrauchbaren Komponente zur Reinigung des Abschnittes (80) erforderlich ist und/oder ob die vom Bodenreinigungsgerät (10) mitgeführte Menge einer vorhandenen verbrauchbaren Komponente zur Reinigung des Abschnittes (80) ausreicht.

9. Bodenreinigungssystem nach einem der voranstehenden Ansprüche, **dadurch gekennzeichnet, dass** der Reinigungspfad (68) ein oder mehrere Segmente aufweisen kann, wobei an zumindest einem Segment mindestens eine Reinigungseinheit (22) aktiviert ist, wobei für den Reinigungspfad (68) zumindest eines der Folgenden gilt:
- an unterschiedlichen Segmenten des Reinigungspfades (68) oder innerhalb eines jeweiligen sind verschiedenartige Reinigungseinheiten (22) aktiviert oder deaktiviert;
- es existiert mindestens ein Segment, bei dem keine Reinigungseinheit (22) aktiviert ist;
- im Reinigungspfad (68) sind Bahnen und belegbare Abschnitte der Bodenfläche hinterlegt;
- im Reinigungspfad (68) ist mindestens ein Interaktionsereignis des Bodenreinigungsgerätes (10) mit der Umgebung hinterlegt, insbesondere ein vom Bodenreinigungsgerät (10) abzugebender akustischer und/oder optischer Hinweis.

10. Bodenreinigungssystem nach einem der voranstehenden Ansprüche, **dadurch gekennzeichnet, dass** an der mindestens einen Anzeigeeinheit (48) ein Hinweis an den Benutzer (70) ausgebbar ist, das Bodenreinigungsgerät (10) mittels der Sensoreinheit (38) erkennbar an einer Landmarke (64) zu positionieren.

11. Bodenreinigungssystem nach einem der voranstehenden Ansprüche, **dadurch gekennzeichnet, dass** im Fall der Erfassung mindestens einer Landmarke (64) zumindest eines der Folgenden gilt:
- eine Information über die dieser zugeordneten Reinigungspfade (68) ist an der Anzeigeeinheit (48) darstellbar, vorzugsweise zur Erstellung der Reinigungsaufgabe;
- die Abarbeitung einer an der Landmarke (64) beginnenden Reinigungsaufgabe ist auslösbar.

12. Bodenreinigungssystem nach einem der voranstehenden Ansprüche, **dadurch gekennzeichnet, dass** zumindest eines der Folgenden gilt:
- bei Führung des Bodenreinigungsgerätes (10) durch den Benutzer ist (70) bei Erfassung der mindestens einen Landmarke (64) durch die Sensoreinheit (38) an der Anzeigeeinheit (48) ein Hinweis über die der Landmarke (64) zugeordneten Reinigungspfade (68) bereitstellbar;
- das Bodenreinigungssystem (12; 120) umfasst mindestens eine Andockstation (54) für das Bodenreinigungsgerät (10), zum Einnehmen einer definierten Position in einer Andockstellung, wobei die mindestens eine Andockstation (54) vorzugsweise eine Landmarke (64) umfasst oder ausbildet.

13. Bodenreinigungssystem nach Anspruch 12, **dadurch gekennzeichnet, dass** zumindest eines der Folgenden gilt:
- dem Bodenreinigungsgerät (10) ist über die mindestens eine Andockstation (54) eine zur Abarbeitung der Reinigungsaufgabe erforderliche verbrauchbare Komponente zuführbar, und/oder eine verbrauchte Komponente des Bodenreinigungsgerätes (10) ist aufnehmbar;
- das Bodenreinigungsgerät (10) ist so ausgebildet, dass an einer jeweiligen Andockstation (54) mindestens eine verbrauchbare Komponente in ausreichender Menge für einen anstehenden Reinigungspfad (68) zugeführt wird und/oder eine verbrauchte Komponente abgeführt wird;
- das Bodenreinigungsgerät (10) ist so ausgebildet, dass bei der Abarbeitung der Reinigungsaufgabe die mindestens eine Andockstation (54) aufsuchbar ist für den Fall, dass die Abarbeitung die Zuführung mindestens einer verbrauchbaren Komponente und/oder die Abgabe mindestens einer verbrauchten Komponente erfordert;
- die mindestens eine Andockstation (54) ist gemäß einer Vorgabe im Reinigungspfad (68) ansteuerbar, für die Zuführung mindestens einer verbrauchbaren Komponente und/oder für die Abgabe mindestens einer verbrauchten Komponente;
- das Bodenreinigungsgerät (10) ist so ausgebildet, dass es bei der Abarbeitung der Reinigungsaufgabe, abhängig von einem noch abzuarbeitenden Rest der Reinigungsaufgabe, selbsttätig eine hierfür erforderliche Menge einer verbrauchbaren Komponente ermittelt und erforderlichenfalls an mindestens einer Andockstation (54) aufnimmt und/oder eine verbrauchte Komponente abgibt, wobei vorzugsweise eine übermäßige Aufnahme der verbrauchbaren Komponente vermieden wird.

14. Bodenreinigungssystem nach einem der voranstehenden Ansprüche, **dadurch gekennzeichnet, dass** zumindest eines der Folgenden gilt:
- das Bodenreinigungsgerät (10) umfasst mindestens eine Speichereinheit (40);
- mindestens eine Speichereinheit (100) ist räumlich entfernt vom Bodenreinigungsgerät (10) positioniert, wobei zu speichernde oder gespeicherte Informationen über eine Kommunikationseinheit (42) vom Bodenreinigungsgerät (10) an die Speichereinheit (100) und/oder umgekehrt übertragbar sind, wobei insbesondere das Bodenreinigungssystem (120) eine Datenverarbeitungseinrichtung (102) umfasst, die die Speichereinheit (100) aufweist;
- das Bodenreinigungsgerät (10) umfasst mindestens eine Anzeigeeinheit (48);
- mindestens eine Anzeigeeinheit (98) ist räumlich entfernt vom Bodenreinigungsgerät (10) positioniert, wobei Bildinformationen vom Bodenreinigungsgerät (10) über eine Kommunikationseinheit (42) an die Anzeigeeinheit (98) übertragbar sind, wobei insbesondere das Bodenreinigungssystem (12) eine Datenverarbeitungseinrichtung (102) umfasst, die die Anzeigeeinheit (48) aufweist.

15. Bodenreinigungsgerät umfassend
ein Fahrwerk (18) zum Verfahren auf einer Bodenfläche (14), eine Steuereinheit (20), eine Sensoreinheit (38), mindestens eine Reinigungseinheit (22) und eine Bedieneinheit (44),
wobei mittels der Sensoreinheit (38) eine Umgebung zum Lokalisieren und/oder Navigieren des Bodenreinigungsgerätes (10) erfassbar ist, insbesondere während der Bewegung,
wobei in mindestens einer Speichereinheit (40) Reinigungspfade (68) für das Bodenreinigungsgerät (10) mit einer jeweiligen Information über einen Fahrweg und vorzugsweise den Einsatz mindestens einer Reinigungseinheit (22) gespeichert sind,
wobei von einem Benutzer (70) an der Bedieneinheit (44) eine Reinigungsaufgabe durch Verknüpfen von zwei oder mehr aufeinanderfolgend abzuarbeitenden Reinigungspfaden (68) vorgebbar und die Reinigungsaufgabe vom Bodenreinigungsgerät (10) selbsttätig abarbeitbar ist, wobei in der Speichereinheit (40) mindestens eine anhand der Sensoreinheit (38) erfassbare charakteristische Landmarke (64) gespeichert ist, der zwei oder mehr Reinigungspfade (68) zugeordnet sind, wobei eine Startposition und/oder eine Endposition eines jeweiligen Reinigungspfades (68) sich an oder bei der Landmarke (64) befindet,
und wobei dem Benutzer (70) an mindestens einer Anzeigeeinheit (48) eine Auswahl der der jeweiligen Landmarke (64) zugeordneten Reinigungspfade (68) bereitstellbar ist.

16. Verfahren zum Betreiben eines Bodenreinigungssystems nach einem der Ansprüche 1 bis 14 oder eines Bodenreinigungsgerätes nach Anspruch 15, umfassend:
Bereitstellen mindestens einer Speichereinheit (40), wobei in der mindestens einen Speichereinheit (40) mindestens eine charakteristische Landmarke (64) gespeichert ist, der zwei oder mehr Reinigungspfade (68) zugeordnet sind, mit einer jeweiligen Information über einen Fahrweg und vorzugsweise den Einsatz mindestens einer Reinigungseinheit (22), wobei eine Startposition und/oder eine Endposition eines jeweiligen Reinigungspfades (68) sich an oder bei der Landmarke (64) befindet;
Bereitstellen einer Auswahl von Reinigungspfaden (68), die der jeweiligen Landmarke (64) zugeordnet sind, für einen Benutzer (70) an der mindestens einen Anzeigeeinheit (48);
Vorgeben einer Reinigungsaufgabe an der Bedieneinheit (44) durch den Benutzer (70) durch Verknüpfen von zwei oder mehr aufeinanderfolgend abzuarbeitenden Reinigungspfaden (68);
selbsttätige Abarbeitung der Reinigungsaufgabe vom Bodenreinigungsgerät (10), wobei während der Bewegung mittels der Sensoreinheit (38) eine Umgebung zum Lokalisieren und/oder Navigieren des Bodenreinigungsgerätes (10) erfasst wird.

## Claims

1. Floor cleaning system comprising a self-propelled and self-steering floor cleaning apparatus (10),
at least one controllable display unit (48),
and at least one storage unit (40; 100),
wherein the floor cleaning apparatus (10) comprises a running gear (18) for traveling on a floor surface (14), a control unit (20), a sensor unit (38), at least one cleaning unit (22), and an operating unit (44),
wherein an environment is detectable by means of the sensor unit (38) in order to locate and/or navigate the floor cleaning apparatus (10), in particular during movement,
wherein cleaning paths (68) for the floor cleaning apparatus (10) are stored in the at least one storage unit (40) with respective information about a route and preferably the use of at least one cleaning unit (22),
wherein a cleaning task is specifiable by a user (70) on the operating unit (44) by linking two or more cleaning paths (68) to be processed successively, and the cleaning task is automatically processable by the floor cleaning apparatus (10), wherein at least one characteristic landmark (64) that is detectable by means of the sensor unit (38) is stored in the storage unit (40) and is associated with two or more cleaning paths (68), wherein a start position and/or an end position of a respective cleaning path (68) is located on or at the landmark (64),
and wherein a selection of the cleaning paths (68) associated with the respective landmark (64) is providable to the user (70) on the at least one display unit (48).

2. Floor cleaning system in accordance with claim 1, **characterized in that** at least one of the following applies:
- two or more characteristic landmarks (64) detectable by means of the sensor unit (38) are stored in the storage unit (40), wherein two or more cleaning paths (68) are associated with at least one landmark (64);
- the floor cleaning systems comprises at least one landmark (64) which is preferably configured as a marker element (66) which is visually and/or electrically and/or electromagnetically detectable by the sensor unit (38), wherein the marker element (66) is in particular a matrix code or a barcode;
- at least one characteristic feature of an environment of the floor cleaning apparatus (10) is usable as a landmark (64).

3. Floor cleaning system in accordance with one of the preceding claims, **characterized in that** at least one of the following applies:
- the cleaning task is storable in the at least one storage unit (40; 100);
- a map (56, 561, 562, 564, 565, 75, 751, 752, 753, 754) of the environment, in which the cleaning paths (68) associated with the landmark (64) are stored, is stored in the storage unit (40) associated with at least one landmark (64);
- a combined map (56, 561, 562, 564, 565, 75, 751, 752, 753, 754), in which the at least one landmark (64) and the cleaning paths (68) associated with these landmarks (64) are stored, is stored in the storage unit (40);
- cleaning paths (68) are provided and associated with the at least one landmark (64), which have a start position and their end position at the landmark (64), and/or cleaning paths (68) are provided which have a start position at one landmark (64) and an end position at another landmark (64).

4. Floor cleaning system in accordance with one of the preceding claims, **characterized in that** the floor cleaning apparatus (10) is hand-guided by a user (70), in particular **in that** at least one of the following applies:
- the floor cleaning apparatus (10) is guidable by the user (70) from a current start position to a landmark (64), starting from which the cleaning task is initiated;
- the floor cleaning apparatus (10) is guidable by the user (70) from a landmark (64) to a parking position after completion of the cleaning task;
- the floor cleaning apparatus (10) is guidable by the user (70) from a first landmark (64) at which a cleaning path (68) ends, up to another landmark, (64) at which another cleaning path (68) begins.

5. Floor cleaning system in accordance with one of the preceding claims, **characterized in that**, in the at least one storage unit (40; 100), at least one transport path (74) linked to at least one landmark (64) is stored without use of the at least one cleaning unit (22), which transport path is specifiable by the user (70) in particular as a component of the cleaning task.

6. Floor cleaning system in accordance with one of the preceding claims, **characterized in that** at least one of the following applies:
- a graphical interface is providable to the user (70) on the display unit (48) for seeking a stored landmark (64) and/or a stored cleaning path (68);
- a map (56, 561, 562, 564, 565, 75, 751, 752, 753, 754) of the environment is displayable to the user (70) on the display unit (48) for selecting a landmark (64) displayed therein and/or a stored cleaning path (68).

7. Floor cleaning system in accordance with one of the preceding claims, **characterized in that** at least one of the following applies:
- a graphical interface is providable to the user (70) on the display unit (48) for displaying information relating to a landmark (64) and/or a stored cleaning path (68), in particular depending upon a preceding search and/or selection in a map (56, 561, 562, 564, 565, 75, 751, 752, 753, 754);
- cleaning paths (68) are selectable on the interface via names and/or symbols (72) and are displayable in a manner linkable to the cleaning task;
- the cleaning paths (68) are displayable linked to a selected landmark (64), wherein, in particular, cleaning paths (68) that are not associated with the landmark (64) are hidden or are displayed as non-selectable;
- the at least one cleaning path (68) is creatable by a user (70) on a data processing device (102) external to the floor cleaning apparatus (10) and is storable in the at least one storage unit (40; 100).

8. Floor cleaning system in accordance with one of the preceding claims, **characterized in that** at least one of the following applies:
- the floor cleaning apparatus (10) is designed and configured to create and store at least one cleaning path (68) under the guidance of the user (70) on the operating unit (44) in a teach-in operating mode, wherein preferably, in the teach-in operating mode, a section (80) of the floor surface (14) recognized by the floor cleaning apparatus (10) and/or a section (80) of the floor surface (14) traversed by the user (70) along a circumference are automatically assignable a route (86, 95, 96) of the cleaning path (68), in particular, so as to cover the entire area;
- a notification is providable to the user (70), in particular on the at least one display unit (48; 98), as to the quantity of a consumable component required to clean the section (80), and/or whether the quantity of an existing consumable component carried by the floor cleaning apparatus (10) is sufficient to clean the section (80).

9. Floor cleaning system in accordance with one of the preceding claims, **characterized in that** the cleaning path (68) is adapted to have one or more segments, wherein at least one cleaning unit (22) is activated on at least one segment, wherein at least one of the following applies to the cleaning path (68):
- different types of cleaning units (22) are activated or deactivated at different segments of the cleaning path (68) or within a respective segment;
- there is at least one segment in which no cleaning unit (22) is activated;
- paths and assignable sections of the floor surface are stored in the cleaning path (68);
- at least one interaction event of the floor cleaning apparatus (10) with the environment is stored in the cleaning path (68), in particular, an acoustic and/or visual notification to be output by the floor cleaning apparatus (10).

10. Floor cleaning system in accordance with one of the preceding claims, **characterized in that** a notification is outputtable to the user (70) on the at least one display unit (48) to recognizably position the floor cleaning apparatus (10) at a landmark (64) by means of the sensor unit (38).

11. Floor cleaning system in accordance with one of the preceding claims, **characterized in that** at least one of the following applies in the event of the detection of at least one landmark (64):
- information about the cleaning paths (68) associated therewith is displayable on the display unit (48), preferably for creating the cleaning task;
- the processing of a cleaning task beginning at the landmark (64) is triggerable.

12. Floor cleaning system in accordance with one of the preceding claims, **characterized in that** at least one of the following applies:
- when the floor cleaning apparatus (10) is guided by the user (70), a notification about the cleaning paths (68) associated with the landmark (64) is providable on the display unit (48) when the at least one landmark (64) is detected by the sensor unit (38);
- the floor cleaning system (12; 120) comprises at least one docking station (54) for the floor cleaning apparatus (10) for assuming a defined position in a docking position, wherein the at least one docking station (54) preferably comprises or forms a landmark (64).

13. Floor cleaning system in accordance with claim 12, **characterized in that** at least one of the following applies:
- the floor cleaning apparatus (10) is suppliable, via the at least one docking station (54), with a consumable component required for processing the cleaning task, and/or a used component of the floor cleaning apparatus (10) is able to be picked up;
- the floor cleaning apparatus (10) is designed such that, at a respective docking station (54), at least one usable component is supplied in a sufficient amount for an upcoming cleaning path (68), and/or a used component is removed;
- the floor cleaning apparatus (10) is designed such that, during the processing of the cleaning task, the at least one docking station (54) is visitable in the event that the processing requires the supply of at least one consumable component and/or the discharge of at least one used component;
- the at least one docking station (54) is headable for in accordance with a specification in the cleaning path (68), for supplying at least one consumable component and/or discharging at least one used component;
- the floor cleaning apparatus (10) is designed such that, during the processing of the cleaning task, depending upon a remainder of the cleaning task still to be processed, it automatically determines an amount of a consumable component required for this purpose and, if necessary, picks it up at at least one docking station (54) and/or discharges a consumed component, wherein picking up too much consumable component is preferably avoided.

14. Floor cleaning system in accordance with one of the preceding claims, **characterized in that** at least one of the following applies:
- the floor cleaning apparatus (10) comprises at least one storage unit (40);
- at least one storage unit (100) is positioned remote from the floor cleaning apparatus (10), wherein information that is to be stored or is stored is transmittable from the floor cleaning apparatus (10) to the storage unit (100) and/or vice versa via a communications unit (42), wherein in particular the floor cleaning system (120) comprises a data processing device (102) which has the storage unit (100);
- the floor cleaning apparatus (10) comprises at least one display unit (48);
- at least one display unit (98) is positioned remote from the floor cleaning apparatus (10), wherein image information is transmittable from the floor cleaning apparatus (10) to the display unit (98) via a communications unit (42), wherein in particular the floor cleaning system (12) comprises a data processing device (102) which has the display unit (48).

15. Floor cleaning apparatus comprising
a running gear (18) for traveling on a floor surface (14), a control unit (20), a sensor unit (38), at least one cleaning unit (22), and an operating unit (44),
wherein an environment is detectable by means of the sensor unit (38) in order to locate and/or navigate the floor cleaning apparatus (10), in particular during movement,
wherein cleaning paths (68) for the floor cleaning apparatus (10) are stored in the at least one storage unit (40) with respective information about a route and preferably the use of at least one cleaning unit (22),
wherein a cleaning task is specifiable by a user (70) on the operating unit (44) by linking two or more cleaning paths (68) to be processed successively, and the cleaning task is automatically processable by the floor cleaning apparatus (10), wherein at least one characteristic landmark (64) that is detectable by means of the sensor unit (38) is stored in the storage unit (40) and is associated with two or more cleaning paths (68), wherein a start position and/or an end position of a respective cleaning path (68) is located on or at the landmark (64),
and wherein a selection of the cleaning paths (68) associated with the respective landmark (64) is providable to the user (70) on the at least one display unit (48).

16. Method for operating a floor cleaning system in accordance with one of claims 1 to 14 or for operating a floor cleaning apparatus in accordance with claim 15, comprising:
providing at least one storage unit (40), wherein at least one characteristic landmark (64) is stored in the at least one storage unit (40), to which landmark are associated two or more cleaning paths (68), with a respective information about a route and preferably the use of at least one cleaning unit (22), wherein a start position and/or an end position of a respective cleaning path (68) is located on or at the landmark (64);
providing a selection of cleaning paths (68) associated with the respective landmark (64) for a user (70) on the at least one display unit (48);
specifying a cleaning task on the operating unit (44) by the user (70) by linking two or more cleaning paths (68) to be processed successively;
automatically processing the cleaning task by the floor cleaning apparatus (10),
wherein during movement an environment is detected by means of the sensor unit (38) in order to locate and/or navigate the floor cleaning apparatus (10).

## Revendications

1. Système de nettoyage de sol, comprenant un appareil de nettoyage de sol (10) autopropulsé et autoguidé,
au moins une unité d'affichage commandable (48)
et au moins une unité de mémoire (40 ; 100),
l'appareil de nettoyage de sol (10) comprenant un châssis (18) pour se déplacer sur une surface de sol (14), une unité de commande (20), une unité de capteurs (38), au moins une unité de nettoyage (22) et une unité de commande utilisateur (44),
l'unité de capteurs (38) permettant de détecter un environnement pour localiser et/ou guider l'appareil de nettoyage de sol (10), en particulier pendant le déplacement,
ladite au moins une unité de mémoire (40) stockant des trajectoires de nettoyage (68) pour l'appareil de nettoyage de sol (10) avec une information respective concernant un trajet et, de préférence, l'utilisation d'au moins une unité de nettoyage (22),
une tâche de nettoyage pouvant être définie par un utilisateur (70) sur l'unité de commande utilisateur (44) par l'association de deux ou plusieurs trajectoires de nettoyage (68) à exécuter successivement, et la tâche de nettoyage pouvant être exécutée automatiquement par l'appareil de nettoyage de sol (10), au moins un repère caractéristique (64) détectable par l'unité de capteurs (38) étant stockée dans l'unité de mémoire (40), auquel repère caractéristique deux ou plusieurs trajectoires de nettoyage (68) sont associées, une position de départ et/ou une position de fin de la respective trajectoire de nettoyage (68) se trouvant sur ou à proximité du repère (64), et une sélection des trajectoires de nettoyage (68) associées au repère (64) respectif pouvant être mise à la disposition de l'utilisateur (70) sur ladite au moins une unité d'affichage (48).

2. Système de nettoyage de sol selon la revendication 1, **caractérisé en ce qu'**au moins l'une des conditions suivantes est remplie :
- dans l'unité de mémoire (40), deux ou plusieurs repères caractéristiques (64) détectables par l'unité de capteurs (38) sont stockés, au moins un repère (64) ayant deux ou plusieurs trajectoires de nettoyage (68) qui lui sont associées ;
- le système de nettoyage de sol comprend au moins un repère (64), qui est de préférence conçu comme un élément marqueur (66) détectable optiquement et/ou électriquement et/ou électromagnétiquement par l'unité de capteurs (38), l'élément marqueur (66) étant en particulier un code matriciel ou un code-barres ;
- au moins une caractéristique distinctive d'un environnement de l'appareil de nettoyage de sol (10) peut être utilisée en tant que repère (64).

3. Système de nettoyage de sol selon l'une quelconque des revendications précédentes, **caractérisé en ce qu'**au moins l'une des conditions suivantes est remplie :
- la tâche de nettoyage peut être stockée dans l' au moins une unité de mémoire (40 ; 100) ;
- dans l'unité de mémoire (40), une carte (56, 561, 562, 564, 565, 75, 751, 752, 753, 754) de l'environnement est stockée, associée à au moins un repère (64), dans laquelle les trajectoires de nettoyage (68) associées au repère (64) sont stockées ;
- dans l'unité de mémoire (40), une carte combinée (56, 561, 562, 564, 565, 75, 751, 752, 753, 754) est stockée, dans laquelle au moins un repère (64) et les trajectoires de nettoyage (68) associées à ce repère (64) sont stockés ;
- des trajectoires de nettoyage (68) sont prévues et associées à l' au moins un repère (64), présentant une position de départ et leur position de fin au niveau du repère (64), et/ou des trajectoires de nettoyage (68) sont prévues, présentant une position de départ au niveau d'un repère (64) et une position de fin au niveau d'un autre repère (64).

4. Système de nettoyage de sol selon l'une quelconque des revendications précédentes, **caractérisé en ce que** l'appareil de nettoyage de sol (10) est guidé manuellement par un utilisateur (70), en particulier **en ce que** au moins l'une des conditions suivantes est remplie :
- l'appareil de nettoyage de sol (10) peut être conduit par l'utilisateur (70) depuis une position de départ actuelle jusqu'à un repère (64), à partir duquel la tâche de nettoyage commence ;
- l'appareil de nettoyage de sol (10) peut être conduit par l'utilisateur (70) après l'achèvement de la tâche de nettoyage d'un repère (64) jusqu'à une position de stationnement ;
- l'appareil de nettoyage de sol (10) peut être conduit par l'utilisateur (70) d'un premier repère (64), où une trajectoire de nettoyage (68) se termine, jusqu'à un autre repère (64), où une autre trajectoire de nettoyage (68) commence.

5. Système de nettoyage de sol selon l'une quelconque des revendications précédentes, **caractérisé en ce qu'**au moins un trajet de transport (74) sans utilisation d'au moins une unité de nettoyage (22), associé à au moins un repère (64), est stocké dans l' au moins une unité de mémoire (40 ; 100), ce trajet pouvant être défini par l'utilisateur (70), en particulier comme partie de la tâche de nettoyage.

6. Système de nettoyage de sol selon l'une quelconque des revendications précédentes, **caractérisé en ce qu'**au moins l'une des conditions suivantes est remplie :
- une interface graphique peut être mise à la disposition de l'utilisateur (70) sur l'unité d'affichage (48), pour rechercher un repère (64) stocké et/ou une trajectoire de nettoyage (68) stockée ;
- une carte (56, 561, 562, 564, 565, 75, 751, 752, 753, 754) de l'environnement peut être affichée à l'utilisateur (70) sur l'unité d'affichage (48), pour sélectionner un repère (64) représenté sur cette carte et/ou une trajectoire de nettoyage (68) stockée.

7. Système de nettoyage de sol selon l'une quelconque des revendications précédentes, **caractérisé en ce qu'**au moins l'une des conditions suivantes est remplie :
- une interface graphique peut être mise à la disposition de l'utilisateur (70) sur l'unité d'affichage (48) pour afficher des informations concernant un repère (64) et/ou une trajectoire de nettoyage (68) stockée, en particulier en fonction d'une recherche et/ou d'une sélection préalable dans une carte (56, 561, 562, 564, 565, 75, 751, 752, 753, 754) ;
- sur l'interface, des trajectoires de nettoyage (68) peuvent être sélectionnées au moyen de noms et/ou de symboles (72) et représentées de manière à pouvoir être associées à la tâche de nettoyage ;
- les trajectoires de nettoyage (68) peuvent être représentées comme associées à un repère sélectionné (64), en particulier les trajectoires de nettoyage (68) non associées au repère (64) étant masquées ou représentées comme non sélectionnables ;
- l'au moins une trajectoire de nettoyage (68) peut être créée par un utilisateur (70) sur un dispositif de traitement de données (102) externe à l'appareil de nettoyage de sol (10) et stockée dans l'au moins une unité de mémoire (40 ; 100).

8. Système de nettoyage de sol selon l'une quelconque des revendications précédentes, **caractérisé en ce qu'**au moins l'une des conditions suivantes est remplie :
- l'appareil de nettoyage de sol (10) est conçu et agencé pour créer et enregistrer au moins une trajectoire de nettoyage (68) dans un mode de fonctionnement d'apprentissage sous la conduite de l'utilisateur (70) au moyen de l'unité de commande (44), de préférence dans lequel, en mode d'apprentissage une section (80) de la surface de sol (14) détectée par l'appareil de nettoyage de sol (10) et/ou une section (80) de la surface de sol (14) contournée par l'utilisateur (70) le long d'un périmètre peut être automatiquement couverte par une trajectoire (86, 95, 96) de la trajectoire de nettoyage (68), en particulier de manière couvrant la surface ;
- en particulier sur l'au moins une unité d'affichage (48 ; 98), une indication peut être fournie à l'utilisateur (70) concernant la quantité d'un composant consommable nécessaire pour le nettoyage de la section (80) et/ou si la quantité disponible du composant consommable transportée par l'appareil de nettoyage de sol (10) est suffisante pour le nettoyage de la section (80).

9. Système de nettoyage de sol selon l'une quelconque des revendications précédentes, **caractérisé en ce que** la trajectoire de nettoyage (68) peut comporter un ou plusieurs segments, au moins une unité de nettoyage (22) étant activée sur au moins un segment, la trajectoire de nettoyage (68) remplissant au moins l'une des conditions suivantes :
- sur différents segments de la trajectoire de nettoyage (68) ou à l'intérieur d'un même segment, différentes unités de nettoyage (22) sont activées ou désactivées ;
- il existe au moins un segment sur lequel aucune unité de nettoyage (22) n'est activée ;
- dans la trajectoire de nettoyage (68), des bandes et des sections de la surface de sol pouvant être couvertes sont enregistrées ;
- dans la trajectoire de nettoyage (68), au moins un événement d'interaction de l'appareil de nettoyage de sol (10) avec l'environnement est enregistré, en particulier une indication acoustique et/ou optique à émettre par l'appareil de nettoyage de sol (10).

10. Système de nettoyage de sol selon l'une quelconque des revendications précédentes, **caractérisé en ce qu'**une indication peut être émise à l'utilisateur (70) sur l'au moins une unité d'affichage (48), de positionner l'appareil de nettoyage de sol (10) de manière à ce que celui-ci soit détectable par l'unité de capteurs (38) au niveau d'un repère (64).

11. Système de nettoyage de sol selon l'une quelconque des revendications précédentes, **caractérisé en ce qu'**en cas de détection d'au moins un repère (64), au moins l'une des conditions suivantes est remplie :
- une information concernant les trajectoires de nettoyage (68) qui lui sont associées peut être représentée sur l'unité d'affichage (48), de préférence pour la création de la tâche de nettoyage ;
- l'exécution d'une tâche de nettoyage débutant au repère (64) peut être déclenchée.

12. Système de nettoyage de sol selon l'une quelconque des revendications précédentes, **caractérisé en ce qu'**au moins l'une des conditions suivantes est remplie :
- lors de la conduite de l'appareil de nettoyage de sol (10) par l'utilisateur (70), lors de la détection d'au moins un repère (64) par l'unité de capteurs (38), une indication concernant les trajectoires de nettoyage (68) associées au repère (64) peut être fournie sur l'unité d'affichage (48) ;
- le système de nettoyage de sol (12 ; 120) comprend au moins une station d'amarrage (54) pour l'appareil de nettoyage de sol (10), pour occuper une position définie dans une position d'amarrage, l'au moins une station d'amarrage (54) comprenant ou constituant de préférence un repère (64).

13. Système de nettoyage de sol selon la revendication 12, **caractérisé en ce qu'**au moins l'une des conditions suivantes est remplie :
- un composant consommable nécessaire à l'exécution de la tâche de nettoyage peut être fourni à l'appareil de nettoyage de sol (10) via l'au moins une station d'amarrage (54) et/ou un composant usagé de l'appareil de nettoyage de sol (10) peut être récupéré ;
- l'appareil de nettoyage de sol (10) est conçu de sorte qu'à chaque station d'amarrage (54), au moins un composant consommable est fourni en quantité suffisante pour une trajectoire de nettoyage (68) à venir et/ou un composant usagé est évacué ;
- l'appareil de nettoyage de sol (10) est conçu de sorte que, lors de l'exécution de la tâche de nettoyage, l'au moins une station d'amarrage (54) puisse être recherchée dans le cas où l'exécution nécessite l'apport d'au moins un composant consommable et/ou l'évacuation d'au moins un composant usagé ;
- l'au moins une station d'amarrage (54) peut être commandée selon une instruction dans la trajectoire de nettoyage (68), pour l'apport d'au moins un composant consommable et/ou pour l'évacuation d'au moins un composant usagé ;
- l'appareil de nettoyage de sol (10) est conçu de sorte que, lors de l'exécution de la tâche de nettoyage, il détermine automatiquement, en fonction de la partie restante de la tâche de nettoyage à exécuter, une quantité nécessaire d'un composant consommable et, si nécessaire, le prélève à au moins une station d'amarrage (54) et/ou y dépose un composant usagé, un prélèvement excessif du composant consommable étant de préférence évité.

14. Système de nettoyage de sol selon l'une quelconque des revendications précédentes,
**caractérisé en ce qu'**au moins l'une des caractéristiques suivantes est remplie :
- l'appareil de nettoyage de sol (10) comprend au moins une unité de mémoire (40) ;
- au moins une unité de mémoire (100) est disposée à distance de l'appareil de nettoyage de sol (10), des informations à stocker ou déjà stockées pouvant être transmises, via une unité de communication (42), de l'appareil de nettoyage de sol (10) vers l'unité de mémoire (100) et/ou inversement, le système de nettoyage de sol (120) comprenant notamment un dispositif de traitement de données (102) comportant l'unité de mémoire (100) ;
- l'appareil de nettoyage de sol (10) comprend au moins une unité d'affichage (48) ;
- au moins une unité d'affichage (98) est disposée à distance de l'appareil de nettoyage de sol (10), des informations d'image pouvant être transmises de l'appareil de nettoyage de sol (10) vers l'unité d'affichage (98) via une unité de communication (42), le système de nettoyage de sol (12) comprenant notamment un dispositif de traitement de données (102) comportant l'unité d'affichage (48).

15. Appareil de nettoyage de sol comprenant
un châssis (18) pour se déplacer sur une surface de sol (14), une unité de commande (20), une unité de capteurs (38), au moins une unité de nettoyage (22) et une unité de commande utilisateur (44),
dans lequel, au moyen de l'unité de capteurs (38), un environnement pour la localisation et/ou la navigation de l'appareil de nettoyage de sol (10) est détectable, en particulier pendant le déplacement,
dans lequel, dans au moins une unité de mémoire (40), des trajectoires de nettoyage (68) pour l'appareil de nettoyage de sol (10) avec une information respective concernant un trajet et, de préférence, l'utilisation d'au moins une unité de nettoyage (22) sont stockées,
dans lequel une tâche de nettoyage peut être définie par un utilisateur (70) au niveau de l'unité de commande utilisateur (44) par la liaison de deux ou plusieurs trajectoires de nettoyage (68) à exécuter successivement, et la tâche de nettoyage peut être exécutée automatiquement par l'appareil de nettoyage de sol (10), dans lequel, dans l'unité de mémoire (40), au moins un repère caractéristique (64) détectable par l'unité de capteurs (38) est stocké, auquel repère caractéristique deux ou plusieurs trajectoires de nettoyage (68) sont associées, une position de départ et/ou une position de fin de la trajectoire de nettoyage (68) respective se trouvant sur ou à proximité du repère (64), et dans lequel une sélection des trajectoires de nettoyage (68) associées au repère (64) respectif peut être mise à la disposition de l'utilisateur (70) sur au moins une unité d'affichage (48).

16. Procédé de fonctionnement d'un système de nettoyage de sol selon l'une des revendications 1 à 14 ou d'un appareil de nettoyage de sol selon la revendication 15, comprenant :
la mise à disposition d'au moins une unité de mémoire (40), dans laquelle, dans ladite au moins une unité de mémoire (40) au moins un repère caractéristique (64) est stocké, auquel deux ou plusieurs trajectoires de nettoyage (68) sont associées, avec une information respective concernant un trajet et, de préférence, l'utilisation d'au moins une unité de nettoyage (22), une position de départ et/ou une position de fin de chaque trajectoire de nettoyage (68) se trouvant sur ou à proximité du repère (64) ; la mise à disposition d'une sélection de trajectoires de nettoyage (68), associées au repère (64) respectif, pour un utilisateur (70) sur ladite au moins une unité d'affichage (48) ;
la définition par l'utilisateur (70) d'une tâche de nettoyage au niveau de l'unité de commande utilisateur (44) par la liaison de deux ou plusieurs trajectoires de nettoyage (68) à exécuter successivement ;
l'exécution automatique de la tâche de nettoyage par l'appareil de nettoyage de sol (10), un environnement pour la localisation et/ou la navigation de l'appareil de nettoyage de sol (10) étant détecté, pendant le déplacement, au moyen de l'unité de capteurs (38).
